(19) **Europäisches Patentamt / European Patent Office / Office européen des brevets**

(11) **EP 4 738 259 A1**

(12) **EUROPEAN PATENT APPLICATION**
published in accordance with Art. 153(4) EPC

(43) Date of publication:
06.05.2026 Bulletin 2026/19

(21) Application number: 24830663.1

(22) Date of filing: 24.06.2024

(51) International Patent Classification (IPC):
*G06T 9/00* (2006.01)

(52) Cooperative Patent Classification (CPC):
G06T 9/00

(86) International application number:
PCT/CN2024/100834

(87) International publication number:
WO 2025/002018 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.06.2023 CN 202310802552

(71) Applicant: Vivo Mobile Communication Co., Ltd.
Dongguan, Guangdong 523863 (CN)

(72) Inventors:
• ZOU, Wenjie
  Dongguan, Guangdong 523863 (CN)
• ZHANG, Wei
  Dongguan, Guangdong 523863 (CN)
• YANG, Fuzheng
  Dongguan, Guangdong 523863 (CN)
• LV, Zhuoyi
  Dongguan, Guangdong 523863 (CN)

(74) Representative: Lavoix
Bayerstraße 83
80335 München (DE)

(54) **CODING METHOD, DECODING METHOD, APPARATUS, AND DEVICE**

(57) This application discloses an encoding method and apparatus, a decoding method and apparatus, and a device, pertaining to the field of encoding and decoding technologies. The encoding method of embodiments of this application includes: performing, by an encoding end, splitting processing on a non-manifold structure in an original mesh to obtain a manifold mesh; adding, by the encoding end, non-manifold identification information to duplicate vertices in the manifold mesh, and determining index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and encoding, by the encoding end, the non-manifold identification information and the index information of the first duplicate vertex to obtain a first bitstream.

An encoding end performs splitting processing on a non-manifold structure in an original mesh to obtain a manifold mesh — 201

The encoding end adds non-manifold identification information to duplicate vertices in the manifold mesh, and determines index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure — 202

The encoding end encodes the non-manifold identification information and the index information of the first duplicate vertex to obtain a first bitstream — 203

FIG. 2

**Description**

**CROSS-REFERENCE TO RELATED APPLICATIONS**

This application claims priority to Chinese Patent Application No. 202310802552.3, filed in China on June 30, 2023, which is incorporated herein by reference in its entirety.

**TECHNICAL FIELD**

This application pertains to the field of encoding and decoding technologies, and specifically relates to an encoding method and apparatus, a decoding method and apparatus, and a device.

**BACKGROUND**

With the increasing demand for visual effects of three-dimensional mesh models, and emergence of many more advanced three-dimensional scanning technologies and three-dimensional modeling software, the data scale and complexity of three-dimensional mesh models obtained by three-dimensional scanning devices or three-dimensional modeling software are also rapidly growing. Therefore, how to efficiently encode three-dimensional mesh data is the key to implement convenient transmission, storage and processing of three-dimensional mesh data. In the related art, to achieve lossless encoding of three-dimensional meshes, when encoding a three-dimensional mesh containing a non-manifold structure, it is necessary to set one identifier to each vertex in a manifold mesh obtained by splitting the non-manifold structures to determine whether it is a point generated by splitting the non-manifold structures. When the number of vertices in the manifold mesh is large, this encoding method results in significant bit overheads, which is not conducive to efficiently achieving lossless encoding of three-dimensional meshes.

**SUMMARY**

Embodiments of this application provide an encoding method and apparatus, a decoding method and apparatus, and a device, which can resolve the problem of how to efficiently implement lossless encoding of a three-dimensional mesh.

According to a first aspect, an encoding method is provided, including:

performing, by an encoding end, splitting processing on a non-manifold structure in an original mesh to obtain a manifold mesh;

adding, by the encoding end, non-manifold identification information to duplicate vertices in the manifold mesh, and determining index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and

encoding, by the encoding end, the non-manifold identification information and the index information of the first duplicate vertex to obtain a first bitstream, where the first indication information is used to indicate whether a non-manifold structure is present in the original mesh.

According to a second aspect, a decoding method is provided, including:

decoding, by a decoding end, a first bitstream to obtain decoding information, where the decoding information includes non-manifold identification information and index information of a first duplicate vertex, the first duplicate vertex is a duplicate vertex generated by performing splitting processing on a non-manifold structure in an original mesh, and the non-manifold identification information is used for indicating whether the duplicate vertex is a duplicate vertex generated by performing splitting processing on the non-manifold structure; and

restoring, by the decoding end, the non-manifold structure in the original mesh based on the decoding information.

According to a third aspect, an encoding apparatus is provided, including:

a first obtaining module, configured to perform splitting processing on a non-manifold structure in an original mesh to obtain a manifold mesh;

a first processing module, configured to add non-manifold identification information to duplicate vertices in the manifold mesh, and determine index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and

a second obtaining module, configured to encode the non-manifold identification information and the index information of the first duplicate vertex to obtain a first bitstream.

According to a fourth aspect, a decoding apparatus is provided, including:

a fifth obtaining module, configured to decode a first bitstream to obtain decoding information, where the decoding information includes non-manifold identification information and index information of a first duplicate vertex, the first duplicate vertex is a duplicate vertex generated by performing splitting processing on a non-manifold structure in an original mesh, and the non-manifold identification information is used for indicating whether the duplicate vertex is a duplicate vertex generated by performing splitting processing on the non-manifold structure; and

a second processing module, configured to restore the non-manifold structure in the original mesh based on the decoding information.

According to a fifth aspect, an encoding apparatus is provided, including a processor and a communication interface, where the processor is configured to perform splitting processing on a non-manifold structure in an original mesh to obtain a manifold mesh; add non-manifold identification information to duplicate vertices in the manifold mesh, and determine index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and encode the non-manifold identification information and the index information of the first duplicate vertex to obtain a first bitstream.

According to a sixth aspect, a decoding apparatus is provided, including a processor and a communication interface, where the processor is configured to decode a first bitstream to obtain decoding information, where the decoding information includes non-manifold identification information and index information of a first duplicate vertex, the first duplicate vertex is a duplicate vertex generated by performing splitting processing on a non-manifold structure in an original mesh, and the non-manifold identification information is used for indicating whether the duplicate vertex is a duplicate vertex generated by performing splitting processing on the non-manifold structure; and restore the non-manifold structure in the original mesh based on the decoding information.

According to a seventh aspect, an electronic device is provided, where the electronic device includes a processor and a memory, and a program or instructions capable of running on the processor are stored in the memory. When the program or the instructions are executed by the processor, the steps of the method according to the first aspect or the second aspect are implemented.

According to an eighth aspect, an encoding and decoding system is provided, including an encoding apparatus and a decoding apparatus, where the encoding apparatus can be configured to perform the steps of the encoding method according to the first aspect, and the decoding apparatus can be configured to perform the steps of the decoding method according to the second aspect.

According to a ninth aspect, a readable storage medium is provided, where a program or instructions are stored in the readable storage medium, and in a case that the program or the instructions are executed by a processor, the steps of the method according to the first aspect are implemented, or the steps of the method according to the second aspect are implemented.

According to a tenth aspect, a chip is provided, where the chip includes a processor and a communication interface, the communication interface is coupled to the processor, and the processor is configured to run a program or instructions to implement the method according to the first aspect or the method according to the second aspect.

According to an eleventh aspect, a computer program/program product is provided, where the computer program/program product is stored in a storage medium, and the computer program/program product is executed by at least one processor to implement the steps of the method according to the first aspect are implemented, or the steps of the method according to the second aspect.

In the embodiments of this application, the encoding end performs splitting processing on a non-manifold structure in an original mesh to obtain a manifold mesh; adds non-manifold identification information to duplicate vertices in the manifold mesh, and determines index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and the encoding end encodes the non-manifold identification information and the index information of the first duplicate vertex to obtain a first bitstream. Through the foregoing solution, the decoding end can restore the non-manifold structure of the original mesh based on the non-manifold identification information obtained by decoding the first bitstream and the index information of the first duplicate vertex, thereby implementing the purpose of lossless encoding of the original mesh. When encoding meshes with non-manifold structure, the encoding end adds non-manifold identifiers only to the duplicate points in the manifold mesh, instead of adding a non-manifold identifier to each vertex in the manifold mesh, thereby implementing lossless encoding of three-dimensional meshes more efficiently.

## BRIEF DESCRIPTION OF DRAWINGS

FIG. 1 is a schematic diagram of five modes of the Edgebreaker encoding method;
FIG. 2 is a schematic flowchart of an encoding method according to an embodiment of this application;
FIG. 3 is a schematic diagram of a three-dimensional mesh lossless encoding framework according to an embodiment of this application;
FIG. 4 is a corresponding schematic diagram of edges and corners in a manifold mesh according to an embodiment of this application;
FIG. 5 is a schematic diagram of an angular relationship according to an embodiment of this application;
FIG. 6 is a schematic diagram of a traversal rule of five modes of the Edgebreaker encoding method according to an embodiment of this application;
FIG. 7 is a schematic diagram of two adjacent triangles in a mesh according to an embodiment of this application;
FIG. 8 is a schematic diagram of UV coordinate prediction based on three-dimensional to two-dimensional projection according to an embodiment of this application;
FIG. 9 is a schematic flowchart of a decoding method according to an embodiment of this application;
FIG. 10 is a schematic diagram of a three-dimensional mesh lossless decoding framework according to an embodiment of this application;
FIG. 11 is a schematic diagram of modules of an encoding apparatus according to an embodiment of this application;
FIG. 12 is a schematic diagram of modules of a decoding apparatus according to an embodiment of this application;
FIG. 13 is a structural block diagram of an electronic device according to an embodiment of this application; and
FIG. 14 is a structural block diagram of an encoding apparatus or a decoding apparatus according to an embodiment of this application.

## DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the "or" in this application means at least one of the associated objects. For example, "A or B" covers three schemes, namely, scheme 1: including A not B; scheme 2: including B not A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as: a sender explicitly notifies, in a sent indication, a receiver of content such as specific information, an operation that needs to be performed, or a request result; and the indirect indication may be understood as: the receiver determines corresponding information or performs determining according to the indication sent by the sender, and determines, according to a determining result, an operation that needs to be performed or a request result.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6th generation (6th Generation, 6G) communication system.

To enable those skilled in the art to better understand the embodiments of this application, the following description is made first.

With rapid development of multimedia technologies, relevant research achievements are rapidly industrialized and become an indispensable part of people's lives. A three-dimensional model becomes a new generation of digital media after audio, image, and video. Three-dimensional mesh and point cloud are two commonly used representations of three-dimensional models. Compared with conventional multimedia such as images and videos, the three-dimensional mesh model is more interactive and realistic, making it more widely used in various fields such as commerce, manufacturing, construction, education, medicine, entertainment, art, and military.

With the increasing demand for visual effects of three-dimensional mesh models, and emergence of many more advanced three-dimensional scanning technologies and three-dimensional modeling software, the data scale and complexity of three-dimensional mesh models obtained by three-dimensional scanning devices or three-dimensional modeling software are also rapidly growing. Therefore, how to efficiently compress three-dimensional mesh data is the key to implement convenient transmission, storage and processing of three-dimensional mesh data.

A three-dimensional mesh usually includes three types of main information: topological information, geometric information, and attribute information. The topological information, also referred to as connectivity relationship information, is used to describe a connection relationship between elements such as a vertex and a face in a mesh. The geometric information is three-dimensional coordinates of all vertices in the mesh. The attribute information records other information attached to the mesh, such as normal vectors, texture coordinates (that is, UV coordinates), and colors. Compression of three-dimensional mesh data is usually performed separately on the three types of information based on data characteristics of the three types of information. In addition, for a three-dimensional mesh with a texture map, it is also necessary to compress the texture map.

Draco is a library for compressing and decompressing a three-dimensional (3-Dimensional, 3D) geometric mesh and a point cloud, aiming at improving storage and transmission of 3D graphics and greatly accelerating the encoding, transmission, and decoding of 3D data. Draco supports compression of geometric information, connection information, and attribute information of three-dimensional meshes. Draco supports lossy mode and near lossless mode. In addition, the Edgebreaker compression method used by Draco for encoding the connection relationship is currently one of the most efficient methods for encoding the connection information of three-dimensional meshes.

However, the Edgebreaker requires that the mesh to be encoded is a manifold structure. For a mesh with a non-manifold structure, the Draco needs to split the mesh into manifold structures, so as to implement correct encoding. The Draco does not merge split structures at the decoding end, so that a mesh output by the decoding end has more split points than an original mesh input by the encoding end. As a result, the Draco cannot perform lossless encoding such meshes with non-manifold structures.

The moving pictures experts group (Moving Pictures Experts Group, MPEG), an international standard organization for the video image field, is working out a new dynamic three-dimensional mesh compression standard (video-based dynamic mesh coding, Video-based Dynamic Mesh Coding, V-DMC). Currently, an Edgebreaker-based scheme is also used when encoding a static three-dimensional mesh, and the Draco codec is temporarily multiplexed. In addition, the MPEG is also attempting to implement a three-dimensional mesh codec based on Edgebreaker provided by the MPEG to compress geometric information, connection information, and attribute information of the three-dimensional mesh. Because the Edgebreaker requires the to-be-encoded mesh to be a manifold structure, in a currently proposed solution, the three-dimensional mesh with a non-manifold structure is split into manifold structures and encoded. Therefore, for lossless mode, the MPEG provides a three-dimensional mesh codec based on Edgebreaker that records and encodes index information of duplicate points generated through non-manifold splitting at the encoding end, and adds one identifier to each vertex of the split manifold mesh to indicate whether it is a duplicate point generated through non-manifold splitting, thereby restoring, at the decoding end, a non-manifold structure of the original three-dimensional mesh based on the identifier and duplicate point index information generated through non-manifold splitting to implement lossless encoding of the three-dimensional mesh. Because splitting of the non-manifold structure is implemented by adding duplicate points with the same geometric information and attribute information, only duplicate points in the decoded three-dimensional mesh may be points added due to the splitting of non-manifold. If one identifier is set for each vertex to determine whether it is a point generated through non-manifold splitting, it will cause encoding redundancy to some extent.

Both the foregoing two solutions are three-dimensional mesh compression schemes implemented based on Edgebreaker, and there is a problem that a non-manifold structure may be present in an input mesh that needs to be split. For lossless compression, it is necessary to restore the possible non-manifold structure of the original three-dimensional mesh at the decoding end. Therefore, a new lossless encoding method based on Edgebreaker for implementing non-manifold three-dimensional meshes is proposed, which is of great significance for implementing lossless encoding of non-manifold meshes more efficiently.

Currently, the MPEG provides a three-dimensional mesh compression tool based on Edgebreaker to separately encode and store connection information, geometric information, and attribute information of the three-dimensional mesh. The core module, that is, the module encoding the connection information, uses the Edgebreaker algorithm. Conventional compression methods are used to encode geometric information and attribute information, that is, performing quantization, prediction compression (such as parallelogram prediction), and entropy encoding on data. Because the tool uses a connection relationship driven encoding method, encoding of geometric information and attribute information follows an encoding order of the connection information. In this way, a vertex sequence for encoding the connection relationship is implicitly included in a vertex sequence of the geometric information, so as to avoid separately transmitting the vertex sequence for encoding the connection relationship, thereby reducing bit overheads of this part.

The Edgebreaker method is a three-dimensional mesh connection relationship encoding method with advantages of good compression performance, easy implementation, and a compression ratio upper limit. The Edgebreaker method describes only a method for compressing three-dimensional mesh connection information, and can compress a three-dimensional mesh through geometric information compression, entropy encoding, and the like.

The Edgebreaker encoding technology can achieve compression efficiency of 2 bits or less per triangle for triangle meshes homeomorphic to a sphere. The encoding algorithm traverses each triangle of the mesh in depth-first order using five different modes (denoted as C, L, E, R, and S). Based on the mode in which each triangle is categorized, it is assigned a corresponding label, generating a CLERS string to obtain a compact representation of the mesh connection relationship.

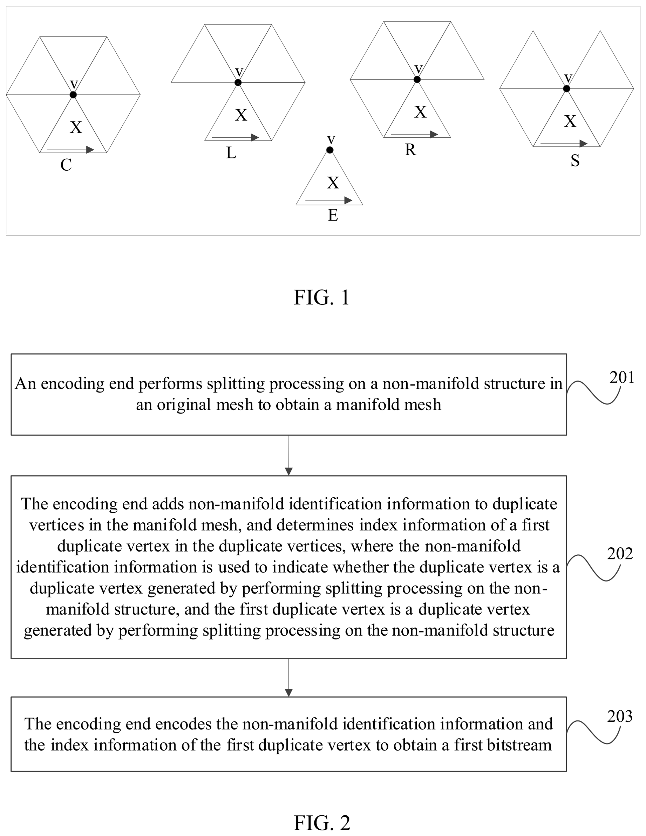

The five modes of the Edgebreaker method are shown in FIG. 1. The Edgebreaker method partitions the mesh into traversed and untraversed parts, with their boundary referred to as an active boundary. During the encoding process of Edgebreaker, triangles to be traversed are accessed via active edges on the active boundary. A mode is selected based on a relationship between the active edge and its associated triangle. The other vertex in the triangle where the active edge is located is called the 3rd vertex. If the 3rd vertex is not on the active boundary, the current triangle is marked as C mode. If the 3rd vertex is on the active boundary and is next to a vertex of the current active edge in counterclockwise order, the current triangle is marked as R mode. If the 3rd vertex is on the active boundary and is a vertex prior to the vertex of the current active edge in counterclockwise order, the current triangle is marked as L mode. If the 3rd vertex is on the active boundary, and it is a vertex prior to the vertex of the current active edge and a next vertex of the current active edge in counterclockwise order, the current triangle is marked as E mode. If the 3rd vertex is on the active boundary, and it is neither a vertex prior to the vertex of the current active edge nor a next vertex of the current active edge in counterclockwise order, the current triangle is marked as S mode.

After one triangle is marked every time, the active boundary is updated and a next active edge is selected according to specific rules. After all triangles are traversed, entropy encoding is performed on the resulting CLERS string, so as to achieve higher compression efficiency.

The following specifically describes the encoding method provided in the embodiments of this application through specific embodiments and application scenarios thereof with reference to the accompanying drawings.

As shown in FIG. 2, an embodiment of this application provides an encoding method, including the following steps.

Step 201: An encoding end performs splitting processing on a non-manifold structure in an original mesh to obtain a manifold mesh.

Optionally, the original mesh is a three-dimensional mesh. The original mesh can be understood as a three-dimensional mesh corresponding to any video frame.

The non-manifold structure in this embodiment of this application includes at least one of a non-manifold edge and a non-manifold point.

The non-manifold edge is an edge that is present simultaneously in at least three triangles in the mesh.

The non-manifold point can be determined in the following manner:

first create a corner table (Corner Table), and establish a correspondence between each vertex in the original mesh and a corner of the vertex. Starting from a specific corner corresponding to a vertex, sequentially traverse all corners adjacent to the corner and forming one sector, and record the vertex and the traversed corners as traversed. If a vertex still has a corner that has not been traversed after the above process, it means that the vertex is a non-manifold point.

Optionally, in this embodiment of this application, if each edge of the mesh is shared by at most two faces and there are no non-manifold points, the mesh is a manifold mesh (manifold mesh); otherwise, it is referred to as a non-manifold mesh (non-manifold mesh).

In this step, the original mesh is divided into manifold meshes, so as to facilitate subsequent encoding based on the encoding scheme in related technologies, for example, encoding is performed by using the three-dimensional mesh encoder based on Edgebreaker.

Step 202: The encoding end adds non-manifold identification information to duplicate vertices in the manifold mesh, and determines index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure.

The duplicate vertex includes the first duplicate vertex and a second duplicate vertex. The second duplicate vertex is a duplicate vertex in the original mesh before splitting processing on the non-manifold structure.

In this embodiment of this application, the non-manifold identification information indicates whether the duplicate vertices (that is, duplicate points) in the manifold mesh are duplicate vertices generated when splitting processing is performed on the non-manifold structure. For example, when the non-manifold identification information is 1, it means that the duplicate vertices are duplicate vertices generated when splitting processing is performed on the non-manifold structure, and when the non-manifold identification information is 0, it means that the duplicate vertices are not duplicate vertices generated when splitting processing is performed on the non-manifold structure.

Step 203: The encoding end encodes the non-manifold identification information and the index information of the first duplicate vertex to obtain a first bitstream.

Because splitting the non-manifold structure is implemented by adding duplicate points with the same geometric information and attribute information, the manifold mesh contains two types of duplicate points: one is a duplicate point existing in the original input mesh itself (the second duplicate vertex in this application), and the other is a duplicate point (the first duplicate vertex) newly generated by splitting the non-manifold structure. In a case that a non-manifold structure is present in the original mesh, it is necessary to encode non-manifold identification information of the above two types of duplicate points and the index information of the first duplicate point, so that the decoding end can merge, based on the non-manifold identification information and the index information, the duplicate vertices generated by splitting the non-manifold structure, and adjust the connection relationship, so as to restore the non-manifold structure in the original mesh and implement lossless encoding of the three-dimensional mesh containing the non-manifold structure.

In this embodiment of this application, the encoding end performs splitting processing on a non-manifold structure in an original mesh to obtain a manifold mesh; adds non-manifold identification information to duplicate vertices in the manifold mesh, and determines index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and the encoding end encodes the non-manifold identification information and the index information of the first duplicate vertex to obtain a first bitstream. Through the foregoing solution, the decoding end can restore the non-manifold structure of the original mesh based on the non-manifold identification information obtained by decoding the first bitstream and the index information of the first duplicate vertex, thereby implementing the purpose of lossless encoding of the original mesh. When encoding meshes with non-manifold structure, the encoding end adds non-manifold identifiers only to the duplicate points in the manifold mesh, instead of adding a non-manifold identifier to each vertex in the manifold mesh, thereby implementing lossless encoding of three-dimensional meshes more efficiently.

Optionally, the first bitstream further includes encoding information of first indication information, and the first indication information is used to indicate whether a non-manifold structure is present in the original mesh.

Optionally, the method in this embodiment of this application further includes:

encoding, by the encoding end, the manifold mesh to obtain a second bitstream; and
obtaining, by the encoding end, a total bitstream of the original mesh based on the first bitstream and the second bitstream.

In this embodiment of this application, when restoring the non-manifold structure, the decoding end requires the manifold mesh in addition to the non-manifold identification information and the index information of the first duplicate vertex. The manifold mesh is encoded, so that the decoding end can restore the non-manifold structure based on the manifold mesh, the non-manifold identification information, and the index information of the first duplicate vertex.

Optionally, the encoding, by the encoding end, the manifold mesh to obtain a second bitstream includes:

encoding, by the encoding end, second target information of the manifold mesh to obtain the second bitstream; where the second target information includes a connection relationship, geometric information, and attribute information.

Optionally, the attribute information includes UV coordinates, that is, texture coordinates. The UV coordinates are information that describes texture of vertices of the three-dimensional mesh.

In this embodiment of this application, the Edgebreaker method can be used to encode a connection relationship to obtain a CLERS pattern string which can concisely represent the connection relationship. Entropy encoding is used to compress a pattern string to obtain a connection relationship sub-bitstream (which can also be described as a connection relationship bitstream). A method such as parallelogram prediction is used to encode geometric information of the mesh to obtain a geometric information sub-bitstream (which can also be described as a geometric information bitstream). A method such as similar triangle prediction is used to encode UV coordinates in the attribute information of the mesh, so as to obtain an attribute information sub-bitstream (which can also be described as an attribute information bitstream). The second bitstream is obtained based on the connection relationship sub-bitstream, the geometric information sub-bitstream, and the attribute information sub-bitstream.

Optionally, the determining index information of a first duplicate vertex in the duplicate vertices includes: determining the index information of the first duplicate vertex based on an encoding order of at least one of the geometric information and the attribute information in the manifold mesh.

The first duplicate vertices include geometric duplicate vertices and attribute duplicate vertices. If the geometric vertices and the attribute vertices in the manifold mesh have the same connection relationship, the index information of the first duplicate vertices can be obtained based on an encoding order for encoding geometric information or attribute information. If the geometric vertices and the attribute vertices in the manifold mesh have different connection relationships, index information of the geometric duplicate vertices in the first duplicate vertices can be obtained based on an encoding order of the geometric information, and the index information of the attribute duplicate vertices in the first duplicate vertices can be obtained based on an encoding order of attribute information.

Optionally, the first duplicate vertex includes a geometric duplicate vertex and an attribute duplicate vertex;

in a case that geometric vertices and attribute vertices in the manifold mesh have a same connection relationship, the geometric duplicate vertices and the attribute duplicate vertices share one group of non-manifold structure information, and the non-manifold structure information includes non-manifold identification information and index information; or

in a case that the geometric vertices and the attribute vertices in the manifold mesh have different connection relationships, the geometric duplicate vertices correspond to a first group of non-manifold structure information, the attribute duplicate vertices correspond to a second group of non-manifold structure information, and both the first group of non-manifold structure information and the second group of non-manifold structure information include non-manifold identification information and index information.

In this embodiment of this application, the geometric vertices and the attribute vertices in the manifold mesh having the same connection relationship means that the geometric vertices are in one-to-one correspondence to the attribute vertices in the manifold mesh. The geometric vertices and the attribute vertices in the manifold mesh having different connection relationships means that the geometric vertices are not in one-to-one correspondence to the attribute vertices in the manifold mesh.

It should be noted that the attribute vertex in this embodiment of this application can also be described as a UV vertex.

Optionally, the total bitstream of the original mesh further includes:

a third bitstream, where the third bitstream is obtained by encoding second indication information, and the second indication information is used to indicate whether the geometric vertices and the attribute vertices in the manifold mesh have a same connection relationship.

Here, the second indication information is encoded, so that the decoding end can learn whether to obtain one group of non-manifold structure information or two groups of non-manifold structure information.

Optionally, the total bitstream of the original mesh further includes:

a fourth bitstream, where the fourth bitstream is obtained by encoding third indication information of the duplicate vertices in the manifold mesh, and the third indication information is used to indicate whether geometric information and attribute information of the duplicate vertices are repeatedly encoded.

In this embodiment of this application, the third indication information is encoded, so that the decoding end can learn whether to encode the geometric information and the attribute information of the duplicate vertices repeatedly/many times, so that the decoding end can decode and obtain corresponding duplicate vertices.

Optionally, in a case that the encoding end simultaneously encodes the connection relationship, the geometric information, and the attribute information, the total bitstream of the original mesh further includes:

a fifth bitstream, where the fifth bitstream is obtained by encoding fourth indication information of vertices in the manifold mesh, where the fourth indication information is used to indicate whether the vertices are duplicate vertices.

Herein, simultaneously encoding the connection relationship, the geometric information, and the attribute information means that when encoding is performed, an order of encoding the three is not sequential, and encoding is performed concurrently.

Herein, the fourth indication information is encoded, so that the decoding end can determine, in a decoding process, which are duplicate vertices, and then determine, based on non-manifold identifiers of the duplicate vertices, which are duplicate vertices generated by splitting the non-manifold structure.

Optionally, the total bitstream of the original mesh further includes:
a sixth bitstream, where the sixth bitstream is obtained by encoding texture map information of the original mesh.

In this embodiment of this application, the texture map information can be encoded by using a video encoder to obtain a sixth bitstream, that is, a texture map sub-bitstream (which can also be described as a texture map bitstream).

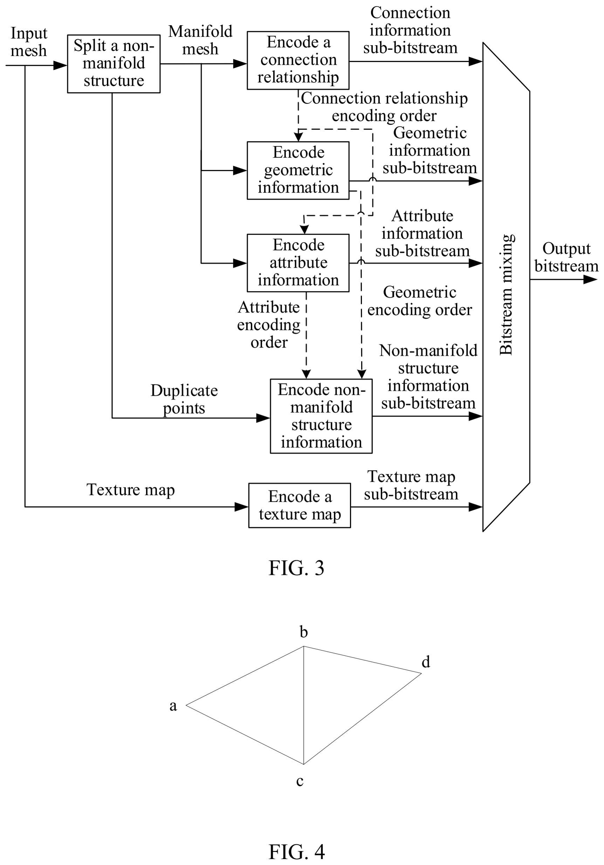

In the three-dimensional mesh encoding framework in this embodiment of this application, as shown in FIG. 3, in the preprocessing step, the duplicate points (that is, the second duplicate points) of the original mesh are first found and recorded; and the original mesh with the non-manifold structure is split to obtain a manifold mesh, and the duplicate points (that is, the first duplicate points) generated by splitting the non-manifold structure are recorded. Then, for the manifold mesh, the connection information is encoded by using the Edgebreaker method to obtain a pattern string, and the pattern string is entropy encoded. For encoding the geometric information of the manifold mesh, for example, the parallelogram prediction encoding method can be used, and the encoding method of the geometric information is not limited here. If the mesh has attribute information such as UV coordinates, encoding can be performed by using a method such as a similar triangle prediction encoding, and the encoding method of the attribute information is not limited here. During encoding of the non-manifold structure information, the indication information of whether non-manifold structure is present in the mesh is first encoded. If a non-manifold structure is present in the mesh, the non-manifold identification information of the duplicate points and the index information of the duplicate points generated by splitting the non-manifold structure are further encoded based on an encoding order of vertices. Here, for the non-manifold identification information of the duplicate point, whether the duplicate point is generated by splitting the non-manifold structure is identified by one flag bit that is encoded for each duplicate vertex in the split manifold mesh. Finally, the multiple bitstreams are mixed to obtain a final output bitstream (that is, the total bitstream).

The specific implementation of encoding processing is described as follows:

As shown in FIG. 3, the three-dimensional mesh lossless encoding framework in this application is mainly divided into five parts: splitting a non-manifold structure during preprocessing, encoding a connection relationship, encoding geometric information, encoding attribute information, and encoding non-manifold structure information. The following provides description separately:

(1) Splitting the non-manifold structure during preprocessing

Input: an original mesh.

Output: a manifold mesh and duplicate points (including duplicate points in the original mesh and duplicate points generated by splitting the non-manifold structure).

The preprocessing step may also include filtering out duplicate points and adding other preprocessing modules required for encoding, such as virtual points. For ease of description, FIG. 3 illustrates only modules for splitting the non-manifold structure.

Before splitting of the non-manifold structure, the duplicate points in the original input mesh are first found and recorded, for example, a hash table can be used for query. Using a hash table as an example, a hash table where the keys are the three-dimensional coordinates of vertices is created, and the values are the number of occurrences of vertices with the three-dimensional coordinates. If the number of occurrence times is greater than 1, it means that it is a duplicate point, so as to identify and record the duplicate points in the original mesh.

Splitting the non-manifold structure is mainly divided into two parts: splitting non-manifold edges and splitting non-manifold points.

The first step of splitting a non-manifold edge is to find the non-manifold edge. A condition for determining the non-manifold edge is that an edge is simultaneously present in three or more triangles. The specific implementation method may be as follows: a data structure may be established to store a triangle in which each edge is located, and the non-manifold edge can be found by querying the number of triangles corresponding to the edge; or may be a correspondence between corners and edges in a mesh is alternatively established by building a corner table, so as to further find out a non-manifold edge. Specifically, for a manifold mesh, each edge is opposite to at most two corners, and the two opposite corners are called diagonal corners. As shown in FIG. 4, corner a and corner d are opposite to edge bc, and corner a and corner d are diagonal; for non-manifold edges, there may be three or more diagonal corners. Therefore, a non-manifold edge can also be found based on the correspondence between corners and edges.

The second step of splitting the non-manifold edge is to add vertices and modify a connection relationship. After the non-manifold edge is found, duplicate vertices are created for two vertices of the non-manifold edge, and one triangle t where the non-manifold edge is located is selected, so that the 3rd vertex in the triangle and the two newly added vertices form a new triangle t', the original triangle t is replaced by t', and this process is iterated until the non-manifold edge is transformed into a manifold edge.

To split non-manifold points, a corner table needs to be first constructed, and a correspondence between each vertex and a corner of the vertex is established. Two steps are performed for each vertex. Step 1: Starting from a specific corner of the vertex, sequentially traverse all corners adjacent to the corner and forming one sector, and mark the vertex and the traversed corners as traversed. If a corner that has not been traversed is still present for a vertex after the above process is complete, it means that the vertex is a non-manifold point. Step 2: For each non-manifold point, create one duplicate point, and modify a connection relationship; and connect the corner not traversed in the first step to the newly added duplicate point, so as to split the non-manifold vertex into two manifold vertices. This process is repeated until all the vertices are transformed into manifold vertices.

In the above process, it is necessary to record the duplicate points generated by splitting the non-manifold structure.

(2) Encoding a connection relationship

Input: a connection relationship of a manifold mesh.

Output: an encoded connection relationship sub-bitstream and a vertex encoding order.

In this application, the Edgebreaker method is used to encode the connection relationship of the three-dimensional mesh, a corner table is established to represent a connection relationship of a mesh, and all triangles in the mesh are traversed by using the corner table to generate a CLERS pattern string of Edgebreaker.

The corner table is used to represent a relationship between corners, vertices, and triangles in a mesh. Before the corner table is constructed, corners need to be numbered first, and triangles are traversed in a sequence of triangle faces in the mesh. For each triangle, the corners are numbered in counterclockwise order. If there are f triangle faces in the mesh, there are 3f corners in the mesh. An advantage of such numbering is that a sequence number of a triangle in which a current corner is located may be calculated by using a sequence number of the corner, as shown in formula 1. A sequence number of a previous corner c_p and a sequence number of a next corner c_n of the current corner c may also be calculated in a counterclockwise direction, as shown in formula 2 and formula 3.

$$f_i \;=\; c \,/\, 3 \qquad\qquad (1)$$

where
c is an index of the current corner, $f_i$ is a sequence number of the triangle where the current corner c is located, "/" is an integer division, and an obtained result is rounded down.

$$c_p \;=\; (f_i * 3) + (c - 1) \,\%\, 3 \qquad\qquad (2)$$

where
c is an index of the current corner, $f_i$ is a sequence number of the triangle where the current corner c is located, "*" is multiplication, and "%" is a modulo operation.

$$c_p \;=\; (f_i * 3) + (c + 1) \,\%\, 3 \qquad\qquad (3)$$

where
c is the index of the current corner, $f_i$ is the sequence number of the triangle where the current corner c is located, "*" is the multiplication and "%" is the modulo operation.

The corner table includes four parts: V table, O table, U table, and M table. The V table stores a vertex index corresponding to each corner, the O table stores a diagonal index of each corner, the U table stores an identifier of whether each triangle has been traversed in the traversal process, and the M table stores an identifier of whether each vertex has been traversed in the traversal process.

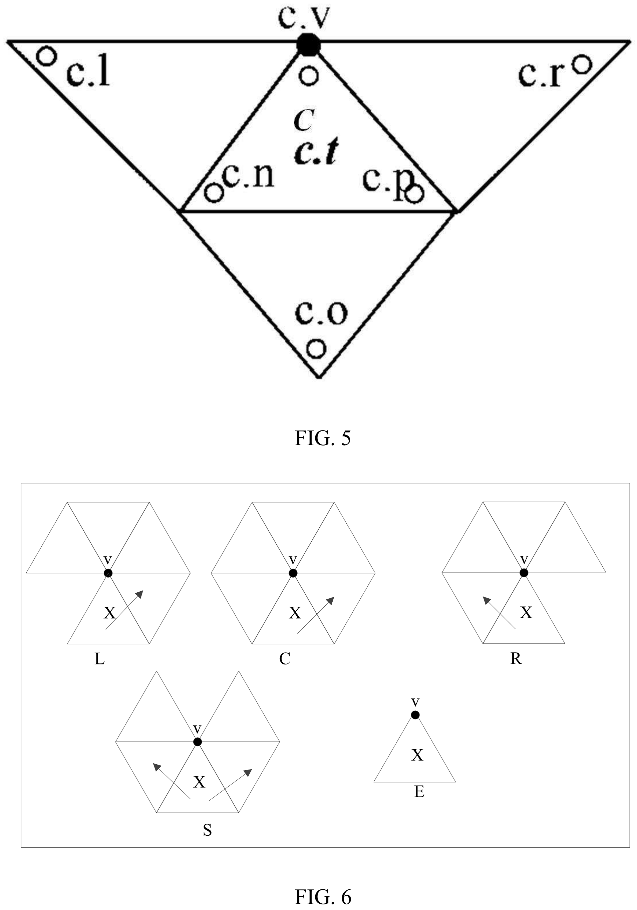

The relationship shown in FIG. 5 can be constructed by the corner table, where c represents a current corner, c.p represents a previous corner of the current corner c (counterclockwise), and c.n represents a next corner of the current corner c. c.o is a diagonal corner of the current corner c, which can be obtained by querying the O table. c.t is a sequence number of the triangle where c is located, which can be calculated by formula 1. c.v represents a vertex of the current corner, which can be obtained by querying the V table. c.l represents a corner to the left of the current corner c, which is obtained by querying a diagonal corner of c.p in the O table; and c.r represents a corner to the right of the current corner c, which is obtained by querying the diagonal corner of c.n in the O table.

After the relationship between corners, vertices, and triangles is constructed by using the corner table, the mesh can be traversed in spiral order to obtain a CLERS pattern string of Edgebreaker representing the mesh connection relationship. In this case, a determining condition and a traversal rule of the five modes are shown in FIG. 6. A currently traversed corner is x. If a vertex x.v corresponding to x has not been accessed, a current triangle is in C mode, and a next triangle to be traversed is a triangle where x.r is located. Otherwise, if a triangle in which x.l is located has been accessed, a current triangle is in L mode, and a next triangle to be traversed is a triangle where x.r is located; if a triangle where x.r is located has been accessed, a current triangle is in R mode, and a next triangle to be traversed is a triangle where x.l is located; and if the vertex x.v has been accessed, but the triangles where x.l and x.r are located have not been accessed, a current triangle is in S mode. In this case, the traversal path produces two branches and a principle of depth-first traversal is adopted. First, the traversed triangle is a triangle where x.r is located, and the triangle where x.l is located needs to be stored into a stack, and then the triangle where x.l is located is traversed after a branch where x.r is located has been traversed. If both triangles where x.l and x.r are located have been accessed, a mode of the current triangle is E, and in this case, an end point of a current traversal path branch has been traversed.

One initial triangle is randomly selected from the mesh, the triangles in the mesh are traversed according to the above rules, and a CLERS pattern string is generated. When the traversal path terminates, but untraversed triangles are still present in the mesh, one untraversed triangle is randomly selected to start the next traversal until all triangles in the mesh have been traversed.

The CLERS pattern string is compressed through entropy encoding to obtain a final connection information bitstream.

(3) Encoding geometric information

Input: geometric information of the manifold mesh and a connection relationship encoding order.

Output: a geometric information sub-bitstream and a geometric information encoding order.

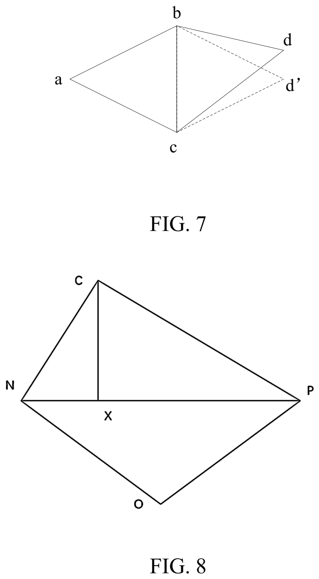

The geometric information can be encoded using multiple methods, such as a difference prediction encoding algorithm, a parallelogram prediction encoding algorithm, or a multi-parallelogram prediction encoding algorithm. The specific encoding method is not limited here. Using the parallelogram prediction encoding algorithm as an example, there are four vertices a, b, c, and d, which form two adjacent triangles in the mesh as shown in FIG. 7.

The geometric information of points a, b, and c has been encoded, and geometric information of point d is to be encoded. In this case, a predicted value d' of geometric coordinates of point d can be calculated by formula 4.

$$d'(x, y, z) = b(x, y, z) + c(x, y, z) - a(x, y, z) \qquad (4)$$

After d' is obtained, a three-dimensional coordinate difference $\Delta d$ between point d' and point d is calculated using formula 5.

$$\Delta d(x, y, z) = d(x, y, z) - d'(x, y, z) \qquad (5)$$

Entropy encoding is performed on $\Delta d$ to obtain a geometric information bitstream.

For triangles that cannot use parallelogram prediction, such as triangles at the boundary of the mesh, the difference encoding method is used to encode geometric information. That is, coordinate values of an adjacent vertex encoded are used as predicted values of coordinates of the current vertex, and a residual is calculated and predicted.

(4) Encoding attribute information

Input: attribute information of the manifold mesh and a connection relationship encoding order.

Output: an attribute information sub-bitstream and an attribute information encoding order.

The attribute information of the three-dimensional mesh generally includes UV coordinates, normal vectors, and the like. The UV coordinates are used as an example. There are many encoding methods for UV coordinates, including difference prediction encoding, parallelogram prediction encoding, and similar triangle prediction encoding, and the like. This section does not emphasize specific encoding methods. The similar triangle prediction algorithm is described below.

First, a triangle in a three-dimensional mesh is selected as an initial triangle. UV coordinates of three vertices of the initial triangle are directly encoded without prediction, and edges of the initial triangle are stored in an edge set, where the set may be a data structure satisfying specific storage and retrieval criteria. Then an edge $\tau$ is taken out from one set and UV coordinates of an opposite vertex of $\tau$ of a next new triangle are predicted. The two edges of the new triangle, excluding $\tau$, are added to the set. A point to be predicted is recorded as point C, endpoints of the edge $\tau$ is recorded as N and P, and an opposite vertex of a triangle adjacent to the new triangle through $\tau$ is recorded as O. A projection point of C on $\tau$ is X. As shown in FIG. 8, the UV coordinates of the points N, P, and O are all encoded before point C; therefore, the three points can be used to predict the UV coordinates of point C. The specific calculation process is as follows:

$C_{uv}$, $X_{uv}$, $N_{uv}$, and $P_{uv}$, $O_{uv}$ are set as UV coordinates of the points, and $C_G$, $X_G$, $N_G$, $P_G$, and $O_G$ are geometric coordinates of the points.

First, the UV coordinates of point X are calculated:

$$\overrightarrow{NX}_{uv} = (\overrightarrow{NP}_G \cdot \overrightarrow{NC}_G)/\overrightarrow{NX}_G{}^2 \qquad (6)$$

$$X_{uv} = \overrightarrow{NX}_{uv} + N_{uv} \qquad (7),$$

where
$\overrightarrow{NP}_G, \overrightarrow{NC}_G, \overrightarrow{NX}_G$, and $\overrightarrow{XC}_G$ are vector representations of the geometric coordinates between the points. For example, $\overrightarrow{NP}_G$ is a vector representation of geometric coordinates between points N and P, $\overrightarrow{NC}_G$ is a vector representation of geometric coordinates between points N and C, $\overrightarrow{NX}_G$ is a vector representation of geometric coordinates between points N and X, and $\overrightarrow{XC}_G$ is a vector representation of geometric coordinates between points X and C.

$\overrightarrow{NX}_{uv}$ and $\overrightarrow{XC}_{uv}$ are respectively vector representations of UV coordinates between the points. For example, $\overrightarrow{NX}_{uv}$ is a vector representation of UV coordinates between points N and X, and $\overrightarrow{XC}_{uv}$ is a vector representation of UV coordinates between points X and C.

The vector $\overrightarrow{XC}_{uv}$ is calculated, where Rotated() denotes a 90-degree rotation of the vector:

$$\overrightarrow{XC}_{uv} = (|\overrightarrow{XC}_G|/|\overrightarrow{NP}_G|) \cdot Rotated(\overrightarrow{NP}_G) \qquad (8)$$

Finally, predicted UV coordinates $Pred_C$ of point C are calculated:

$$\overrightarrow{CO1}_{uv} = O_{uv} - (X_{uv} + \overrightarrow{XC}_{uv}) \qquad (9)$$

$$\overrightarrow{CO2}_{uv} = O_{uv} - (X_{uv} - \overrightarrow{XC}_{uv}) \qquad (10)$$

$$Pred_C = \begin{cases} X_{uv} + \overrightarrow{XC}_{uv} & |\overrightarrow{CO1}_{uv}| > |\overrightarrow{CO2}_{uv}| \\ X_{uv} - \overrightarrow{XC}_{uv} & |\overrightarrow{CO1}_{uv}| < |\overrightarrow{CO2}_{uv}| \end{cases} \qquad (11),$$

where
$\overrightarrow{CO1}_{uv}$ and $\overrightarrow{CO2}_{uv}$ both represent the vectors of the UV coordinates between point C and point O, but in different value forms.

After the predicted value of UV coordinates is obtained, a residual value is obtained by subtracting it from the original UV coordinates.

The steps of encoding the UV coordinates are as follows:

(1) Select one initial triangle from a connection relationship and directly encode UV coordinates of three vertices of the initial triangle without prediction; and store edges of the initial triangle into an edge set.

(2) Select an edge $\tau$ from the set according to the storage and retrieval criteria, and encode UV coordinates of an opposite vertex of a new triangle formed with $\tau$. Using a three-dimension-to-two-dimension projection relationship of the triangle, calculate a predicted value of a to-be-encoded point based on the UV coordinate prediction value described above. Subtract an original value of UV coordinates from the predicted value to obtain the residual.

(3) Add two edges of the new triangle to the edge set, and remove the edge $\tau$ at the top of the set. Take a next edge from the set, continue encoding UV coordinates of an opposite vertex of a triangle adjacent to the edge, and return to step (3) until UV coordinates of all vertices are encoded.

Entropy encoding is performed on a UV coordinate residual to output a UV coordinate bitstream.

(5) Encoding non-manifold structure information

Input: information indicating whether a non-manifold structure is present in the mesh, non-manifold identifiers of duplicate points, index information of duplicate points generated through non-manifold splitting, a geometric information encoding order, and an attribute information encoding order.

Output: non-manifold structure information sub-bitstream.

First, information indicating whether a non-manifold structure is present in the mesh (that is, first indication information) is encoded, which can be represented by setting an identifier indicating whether a non-manifold structure is present in the mesh or by using the number of duplicate points generated by splitting a non-manifold structure. The representation manner is not limited here. Using an identifier being set to indicate whether a non-manifold structure is present as an example, if a non-manifold structure is not present in the mesh, that is, the number of duplicate points generated through non-manifold splitting is greater than 0, the identifier is set to 0, with no need to encode non-manifold identifiers of duplicate points or index information of duplicate points (that is, first duplicate vertices) generated through non-manifold splitting; if a non-manifold structure is present in the mesh, that is, the number of duplicate points generated through non-manifold splitting is greater than 0, the identifier is set to 1, and then the non-manifold identifiers of the duplicate points and the index information of the duplicate points generated through non-manifold splitting are encoded.

The duplicate points generated by splitting the non-manifold include geometric duplicate points and attribute duplicate points. If considering whether geometric vertices and attribute vertices (for example, UV vertices) have a same connection relationship, there are two cases: In case 1, when the geometric vertices and attribute vertices in the mesh have the same connection relationship, directly encode non-manifold identifiers of one group of duplicate points and the index information of the duplicate points generated through non-manifold splitting, where the index information can be obtained based on the encoding order of geometric information and attribute information at the encoding end. In case 2, when the geometric vertices and attribute vertices in the mesh have different connection relationships, encode non-manifold identifiers of two groups of duplicate points and the index information of the duplicate points generated through non-manifold splitting, where the index information can be obtained based on the geometric information encoding order and the attribute information encoding order at the encoding end, respectively. For a representation manner of the index information of the duplicate points generated by splitting the non-manifold structure, it may be a target vertex index to which the points need to be merged when restoring the non-manifold structure, or it may be a duplicate point group index: points with a same index belong to a same duplicate point group, that is, with the same vertex information. The representation manner is not limited here.

The specific implementation is as follows: Set one flag bit for each duplicate vertex in the manifold mesh to indicate whether a point at a current position is a duplicate point generated through non-manifold splitting, and record the index information of the duplicate points generated through non-manifold splitting. Then, perform entropy encoding on a binary string sequence obtained by arranging flag bits according to a corresponding encoding order and the index information of the duplicate points generated by splitting the non-manifold structure to obtain a non-manifold structure information bitstream.

The non-manifold structure information bitstream can be stored in the total bitstream in various manners. In one manner, store the non-manifold structure information bitstream as a separate sub-bitstream; in another manner, store the geometric non-manifold structure information bitstream in the geometric information sub-bitstream and store the attribute non-manifold structure information bitstream in the attribute information sub-bitstream; or store the geometric non-manifold structure information bitstream and the attribute non-manifold structure information bitstream as two sub-bitstreams in the total bitstream. Here, the storage manner of the non-manifold structure information bitstream in the total bitstream is not limited.

It should be noted that during encoding of the geometric information and attribute information of vertices, the geometric information and attribute information of the duplicate points can either be skipped, that is, being encoded only once, or not skipped. Whether to skip encoding of the geometric information and attribute information of the duplicate points is not limited here. However, if the encoding of geometric information and attribute information of duplicate points is skipped, additional information is required to indicate whether the geometric information and attribute information of the vertices are skipped; otherwise, the geometric information and attribute information of the skipped encoded vertices cannot be decoded, and the duplicate points cannot be found at the decoding end. Specifically, one identifier can be set for each vertex to indicate whether encoding of its geometric information and attribute information is skipped. The representation manner is not limited here.

The embodiments of this application do not restrict the order of encoding the connection relationship and vertex information of the three-dimensional mesh. It is possible to encode the geometric information, attribute information, and non-manifold structure information while encoding the connection relationship, or to encode the geometric information, attribute information, and non-manifold structure information sequentially according to the encoding order of the connection relationship after the connection relationship is encoded. However, if the geometric information, attribute information, and non-manifold structure information are encoded while encoding the connection relationship, additional information indicating whether a vertex is a duplicate point needs to be added to allow determining, during the decoding process, which vertex is a duplicate point, and then determining, based on non-manifold identifiers of the duplicate points, which are duplicate points generated through non-manifold splitting. For the information indicating whether a vertex is a duplicate point, one duplicate point identifier can be set for each vertex to indicate whether the vertex is a duplicate point. The representation manner is not limited here.

If considering whether geometric vertices and UV vertices have a same connection relationship, information indicating whether the geometric vertices and UV vertices have the same connection relationship also needs to be encoded. For the representation manner of such information, one identifier may be set to indicate whether the geometric vertices and UV vertices have the same connection relationship. The representation manner is not limited here.

In the foregoing solution of this embodiment of this application, the encoding end performs splitting processing on a non-manifold structure in an original mesh to obtain a manifold mesh; adds non-manifold identification information to duplicate vertices in the manifold mesh, and determines index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and the encoding end encodes the non-manifold identification information and the index information of the first duplicate vertex to obtain a first bitstream. Through the foregoing solution, the decoding end can restore the non-manifold structure of the original mesh based on the non-manifold identification information obtained by decoding the first bitstream and the index information of the first duplicate vertex, thereby implementing the purpose of lossless encoding of the original mesh. When encoding meshes with non-manifold structure, the encoding end adds non-manifold identifiers only to the duplicate points in the manifold mesh, instead of adding a non-manifold identifier to each vertex in the manifold mesh, thereby implementing lossless encoding of three-dimensional meshes more efficiently.

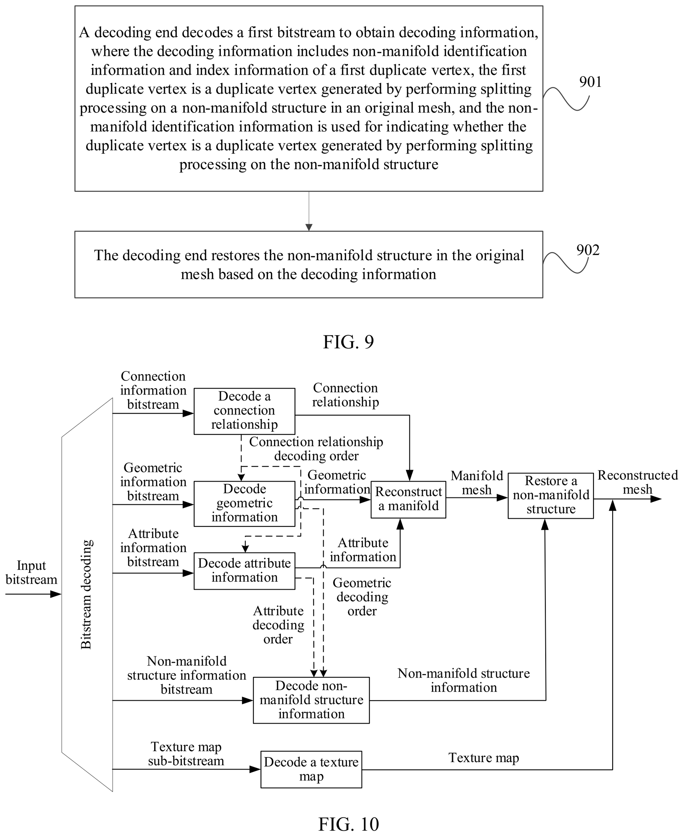

As shown in FIG. 9, an embodiment of this application further provides a decoding method, including the following steps.

Step 901: A decoding end decodes a first bitstream to obtain decoding information, where the decoding information includes non-manifold identification information and index information of a first duplicate vertex, the first duplicate vertex is a duplicate vertex generated by performing splitting processing on a non-manifold structure in an original mesh, and the non-manifold identification information is used for indicating whether the duplicate vertex is a duplicate vertex generated by performing splitting processing on the non-manifold structure.

Step 902: The decoding end restores the non-manifold structure in the original mesh based on the decoding information.

In this embodiment of this application, the decoding end decodes the first bitstream to obtain the non-manifold identification information and the index information of the first duplicate vertex; and based on the index information of the first duplicate vertex and the non-manifold identification information, restores the non-manifold structure in the original mesh. In this solution, the non-manifold structure of the original mesh can be restored based on the non-manifold identification information obtained by decoding the first bitstream and the index information of the first duplicate vertex, thereby implementing the purpose of lossless encoding of the original mesh. Non-manifold identifiers are added only to the duplicate points in the manifold mesh, instead of adding a non-manifold identifier to each vertex in the manifold mesh, thereby implementing lossless encoding and decoding of three-dimensional meshes more efficiently.

Optionally, the decoding information further includes first indication information, and the first indication information is used to indicate whether a non-manifold structure is present in the original mesh; and

the restoring, by the decoding end, the non-manifold structure in the original mesh based on the decoding information comprises:

in a case that the first indication information indicates that a non-manifold structure is present in the original mesh, restoring the non-manifold structure in the original mesh based on the index information of the first duplicate vertex and the non-manifold identification information.

Optionally, the restoring the non-manifold structure in the original mesh based on the index information of the first duplicate vertex and the non-manifold identification information includes:

reconstructing a manifold mesh based on second target information of the manifold mesh, where the second target information is obtained by decoding a second bitstream, and the second target information includes a connection relationship, geometric information, and attribute information; and

restoring the non-manifold structure in the original mesh based on the reconstructed manifold mesh, the index information of the first duplicate vertex, and the non-manifold identification information.

In this embodiment of this application, the decoding end decodes the second bitstream to obtain the second target information of the manifold mesh. For example, a CLERS pattern string is obtained through entropy decoding, and a connection relationship is reconstructed by using the pattern string. The geometric information of the mesh is decoded by using a method such as parallelogram inverse prediction, and UV coordinates in the attribute information of the mesh are decoded by using a method such as similar triangle inverse prediction. During decoding of the non-manifold structure information, the information (that is, the first indication information) indicating whether a non-manifold structure is present in the mesh is first decoded. If a non-manifold structure is present in the mesh, the non-manifold identification information of the duplicate points and the index information of the duplicate points generated by splitting the non-manifold structure are further decoded, the duplicate points generated by splitting the non-manifold structure are merged, and the connection relationship is adjusted, so that the non-manifold structure in the mesh is restored, thereby implementing lossless encoding and decoding of meshes containing non-manifold structures.

Optionally, the restoring the non-manifold structure in the original mesh based on the reconstructed manifold mesh, the index information of the first duplicate vertex, and the non-manifold identification information includes:

restoring the non-manifold structure in the original mesh based on the reconstructed manifold mesh, the index information of the first duplicate vertex, the non-manifold identification information, and fourth indication information; where

the fourth indication information is obtained by decoding a fifth bitstream, and the fourth indication information is used to indicate whether vertices in the manifold mesh are duplicate vertices.

Herein, based on the fourth indication information obtained by decoding, the decoding end can determine which are duplicate vertices in a case that the geometric information, attribute information and connection relationship of the manifold mesh are encoded simultaneously, so as to further determine, based on the non-manifold identifiers of the duplicate vertices, which are the duplicate vertices generated by splitting the non-manifold structure.

Optionally, the decoding, by the decoding end, the second bitstream to obtain the second target information of the manifold mesh includes:

decoding the second bitstream based on third indication information of the duplicate vertices in the manifold mesh to obtain geometric information and attribute information of the manifold mesh; where

the third indication information is obtained by decoding a fourth bitstream, and the third indication information is used to indicate whether geometric information and attribute information of the duplicate vertices are repeatedly encoded.

In this embodiment of this application, the decoding end can use the decoded third indication information to determine whether the geometric information and attribute information of the duplicate vertices have been encoded repeatedly or multiple times, so that the decoding end can decode and obtain corresponding duplicate vertices.

Optionally, the first duplicate vertex includes a geometric duplicate vertex and an attribute duplicate vertex;

in a case that geometric vertices and attribute vertices in the manifold mesh have a same connection relationship, the geometric duplicate vertices and the attribute duplicate vertices share one group of non-manifold structure information, and the non-manifold structure information includes non-manifold identification information and index information; or

in a case that the geometric vertices and the attribute vertices in the manifold mesh have different connection relationships, the geometric duplicate vertices correspond to a first group of non-manifold structure information, the attribute duplicate vertices correspond to a second group of non-manifold structure information, and both the first group of non-manifold structure information and the second group of non-manifold structure information include non-manifold identification information and index information.

In this embodiment of this application, the geometric vertices and the attribute vertices in the manifold mesh having the same connection relationship means that the geometric vertices are in one-to-one correspondence to the attribute vertices in the manifold mesh. The geometric vertices and the attribute vertices in the manifold mesh having different connection relationships means that the geometric vertices are not in one-to-one correspondence to the attribute vertices in the manifold mesh.

Optionally, the method in this embodiment of this application further includes:

decoding a third bitstream to obtain second indication information, where the second indication information is used to indicate whether the geometric vertices and the attribute vertices in the manifold mesh have a same connection relationship; and

determining, based on the second indication information, whether the geometric vertices and the attribute vertices in the manifold mesh have a same connection relationship.

Optionally, the method in this embodiment of this application further includes:
decoding a sixth bitstream to obtain texture map information of the original mesh.

The three-dimensional mesh decoding framework in this embodiment of this application is shown in FIG. 10. Entropy decode is performed on a connection relationship sub-bitstream to obtain a pattern string and reconstruct a connection relationship. The geometric information of the mesh is decoded using a decoding method corresponding to the encoding end; and the attribute information of the mesh is decoded using a decoding method corresponding to the encoding end. During decoding of the non-manifold structure information, the information indicating (that is, the first indication information) whether a non-manifold structure is present in the mesh is first decoded. If a non-manifold structure is present in the mesh, decoding is further performed to obtain non-manifold identifiers of duplicate points and index information of duplicate points generated through non-manifold splitting. (Note: The order of decoding the connection relationship of the three-dimensional mesh and the vertex information is not limited here, so long as it corresponds to the manner at the encoding end) In the post-processing step of restoring the non-manifold structure, the duplicate points generated through non-manifold splitting are merged and the connection relationship is adjusted to restore the non-manifold structure in the mesh, thereby implementing lossless encoding and decoding of meshes containing non-manifold structures. It should be noted that the post-processing step may also include modules required for correct decoding, such as restoring filtered duplicate points and removing added virtual vertices. For ease of description, FIG. 10 illustrates only modules for restoring the non-manifold structure.

The specific implementation of decoding processing is described as follows:

As shown in FIG. 10, the lossless three-dimensional mesh decoding framework of this application is mainly divided into six parts: connection relationship decoding, geometric information decoding, attribute information decoding, non-manifold structure information decoding, manifold mesh reconstruction, and non-manifold structure restoration in post-processing. The following provides description separately.

(1) Decoding a connection relationship

Input: a connection relationship sub-bitstream to be decoded.

Output: a connection relationship of the manifold mesh and a decoded vertex sequence.

First, the connection relationship sub-bitstream is decoded to obtain a pattern string, the pattern string is traversed in a specific order (forward or reverse) and a connection relationship is reconstructed based on a corresponding pattern in the string. In addition, a vertex traversal order is output to a geometric information and attribute information decoding module.

(2) Decoding geometric information

Input: a geometric information sub-bitstream and a connection relationship decoding order.

Output: geometric information of the manifold mesh.

The decoding process of mesh geometric coordinates is the inverse of the encoding process: entropy decoding is first performed to decode a coordinate prediction residual, coordinates of a to-be-decoded point is then predicted based on a decoded triangle according to a parallelogram rule, and the predicted coordinates are added to entropy-decoded residual values to obtain a geometric coordinate position of the to-be-decoded point. The vertex traversal order here is the same as a vertex sequence for encoding geometric information. It should be noted that geometric coordinates of an initial triangle are not encoded using prediction, and geometric coordinate values are directly encoded. After the geometric coordinates of the triangle is decoded at the decoding end, it is used as the initial triangle to start traversing and decoding geometric coordinates of other triangle vertices. In addition, other decoding methods may be used here, and the specific decoding method is not limited, as long as it corresponds to the encoding end.

(3) Decoding attribute information coding

Input: an attribute information bitstream to be decoded and a connection relationship decoding order.

Output: Reconstructed attribute information of the manifold mesh.

Using UV coordinates as an example, the UV coordinates are decoded using a decoding method corresponding to the encoding end, and the specific decoding method is not limited here. The decoding process using a similar triangle prediction algorithm is described below.

The steps of decoding the UV coordinates are as follows:

(1) Perform entropy decoding on a UV coordinate bitstream.
(2) Decode UV coordinates of three vertices of an initial triangle, where the predicted value is not calculated, and for the initial triangle, its UV coordinates are directly encoded, instead of encoding a residual; and store edges of the initial triangle into an edge set.
(3) Select an edge τ from the set according to the storage and retrieval criteria, and decode UV coordinates of an opposite vertex of a new triangle formed with τ. First, use a three-dimension-to-two-dimension mapping relationship of the triangle to calculate a predicted value of UV coordinates of the to-be-decoded point in the same way as the encoding end. Then, add the predicted value to the residual of entropy decoding to obtain reconstructed UV coordinates.
(4) Add two edges of the new triangle to the edge set, and remove the edge τ at the top of the set. Take a next edge from the set, continue decoding UV coordinates of an opposite vertex of a triangle adjacent to the edge, and return to step (3) until UV coordinates of all vertices are decoded.

(4) Decoding non-manifold structure information

Input: a non-manifold structure information sub-bitstream, a geometric information decoding order, and an attribute information decoding order.

Output: information indicating whether a non-manifold structure is present in the mesh, non-manifold identifiers of duplicate points, and index information of duplicate points generated by splitting a non-manifold structure.

The indication information indicating whether a non-manifold structure is present in the mesh is first decoded. Using the information being an identifier indicating whether a non-manifold structure is present as an example: if the identifier is 0, there is no need to decode the non-manifold identification information of the duplicate points and the index information of the duplicate points generated by splitting the non-manifold structure, and skip a subsequent module of restoring the non-manifold structure; or if the identifier is 1, the non-manifold identifiers of the duplicate points and the index information of the duplicate points generated by splitting the non-manifold structure are decoded. (Note: In a case of considering whether geometric vertices and UV vertices have a same connection relationship, whether to decode non-manifold identification information of the geometric vertices and UV vertices and the index information of the duplicate points generated by splitting the non-manifold structure is determined based on decoded information indicating whether the geometric vertices and the UV vertices have the same connection relationship.)

The non-manifold identifiers of the duplicate points and the index information of the duplicate points generated by splitting the non-manifold structure are decoded by a method corresponding to that of the encoding end. First, entropy decoding is performed to obtain the non-manifold identifiers of duplicate points, and then the index information of the duplicate points generated by splitting the non-manifold structure is decoded and recorded. Such information is output to a module for restoring the non-manifold structure.

(5) Reconstructing a manifold mesh

Input: a connection relationship of the manifold mesh, geometric information of the manifold mesh, and attribute information of the manifold mesh.

Output: the manifold mesh.

The manifold mesh can be directly reconstructed by using the connection relationship, geometric information, and attribute information of the manifold mesh.

(6) Restoring a non-manifold structure

Input: the manifold mesh, the non-manifold identifiers of the duplicate points, and the index information of the duplicate points generated by splitting the non-manifold structure.

Output: a reconstructed non-manifold mesh.

The restoration process for non-manifold edges and non-manifold points is the same. First, identify duplicate points in the manifold mesh, for example, using a method such as a hash table or kd-tree. Using a hash table as an example, create a hash table where the keys are the coordinates of vertices, and the values are the number of occurrences of vertices with those coordinates, to identify and record duplicate points. Then, traverse all duplicate points, and based on the non-manifold identifiers of the duplicate points, determine whether the current duplicate point is a duplicate point generated through non-manifold splitting, where if the current duplicate point is not a duplicate point generated through non-manifold splitting, the current vertex corresponds to its current vertex index, that is, its index is not updated. If the current vertex is a duplicate point generated through non-manifold splitting, it is determined, based on the index information of the duplicate points generated through non-manifold splitting, whether it is a target vertex to which the point with the current vertex information needs to be merged. If it is the target vertex to be merged to, the current vertex corresponds to its current vertex index, and its index is not updated; or if it is not the target vertex to be merged to, an operation of merging the duplicate points generated through non-manifold splitting is performed, that is, an index of the current point is updated to an index of the corresponding target vertex to which it needs to be merged. Finally, update a geometric information list and an attribute information list, and update index values of geometric points and attribute points in the connection relationship to obtain the reconstructed non-manifold mesh.

It should be noted that if considering whether geometric vertices and attribute vertices have the same connection relationship, when the geometric vertices and the attribute vertices have different connection relationships, the above steps are performed separately for the geometric vertices and the attribute vertices to obtain the reconstructed non-manifold mesh.

If the geometric information, the attribute information, and the non-manifold structure information are decoded while decoding the connection relationship, additional information indicating whether a vertex is a duplicate point also needs to be decoded. In this case, during the decoding process, whether duplicate points are duplicate points generated by splitting the non-manifold structure needs to be identified and determined; and operations of merging the duplicate points, updating the geometric information list and the attribute information list, and updating the index values of the geometric vertices and attribute vertices in the connection relationship are performed to restore the non-manifold structure. After other possible post-processing operations, such as removing virtual points, the final reconstructed non-manifold mesh is obtained.

In this embodiment of this application, the decoding end decodes the first bitstream to obtain the non-manifold identification information and the index information of the first duplicate vertex; and based on the index information of the first duplicate vertex and the non-manifold identification information, restores the non-manifold structure in the original mesh. In this solution, the non-manifold structure of the original mesh can be restored based on the non-manifold identification information obtained by decoding the first bitstream and the index information of the first duplicate vertex, thereby implementing the purpose of lossless encoding of the original mesh. Non-manifold identifiers are added only to the duplicate points in the manifold mesh, instead of adding a non-manifold identifier to each vertex in the manifold mesh, thereby implementing lossless encoding and decoding of three-dimensional meshes more efficiently.

In the encoding method provided in this embodiment of this application, the executing subject can be an encoding apparatus. In the embodiments of this application, the encoding apparatus provided in the embodiments of this application is described by using the encoding method being executed by the encoding apparatus as an example.

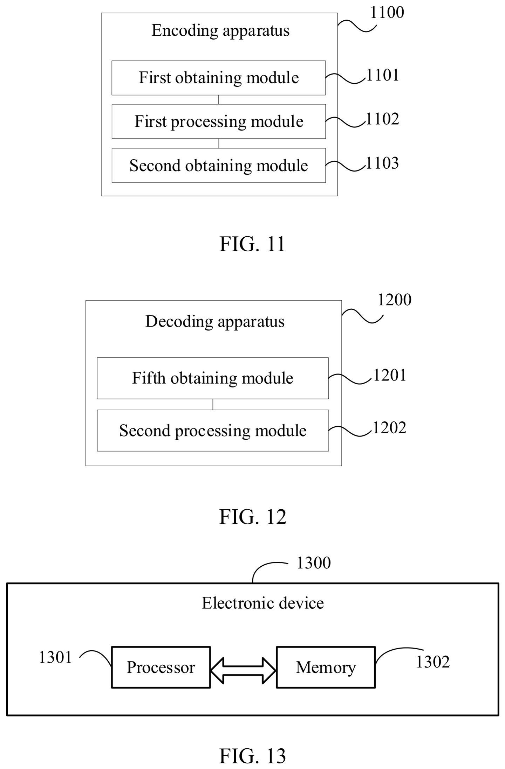

As shown in FIG. 11, an embodiment of this application further provides an encoding apparatus 1100, including:

a first obtaining module 1101, configured to perform splitting processing on a non-manifold structure in an original mesh to obtain a manifold mesh;

a first processing module 1102, configured to add non-manifold identification information to duplicate vertices in the manifold mesh, and determine index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and

a second obtaining module 1103, configured to encode the non-manifold identification information and the index information of the first duplicate vertex to obtain a first bitstream.

Optionally, the first bitstream further includes encoding information of first indication information, and the first indication information is used to indicate whether a non-manifold structure is present in the original mesh.

Optionally, the apparatus in this embodiment of this application further includes:

a third obtaining module, configured to encode the manifold mesh to obtain a second bitstream; and
a fourth obtaining module, configured to obtain a total bitstream of the original mesh based on the first bitstream and the second bitstream.

Optionally, the third obtaining module is configured to encode second target information of the manifold mesh to obtain the second bitstream; where
the second target information includes a connection relationship, geometric information, and attribute information.

Optionally, the first duplicate vertex includes a geometric duplicate vertex and an attribute duplicate vertex;

in a case that geometric vertices and attribute vertices in the manifold mesh have a same connection relationship, the geometric duplicate vertices and the attribute duplicate vertices share one group of non-manifold structure information, and the non-manifold structure information includes non-manifold identification information and index information; or
in a case that the geometric vertices and the attribute vertices in the manifold mesh have different connection relationships, the geometric duplicate vertices correspond to a first group of non-manifold structure information, the attribute duplicate vertices correspond to a second group of non-manifold structure information, and both the first group of non-manifold structure information and the second group of non-manifold structure information include non-manifold identification information and index information.

Optionally, the total bitstream of the original mesh further includes:
a third bitstream, where the third bitstream is obtained by encoding second indication information, and the second indication information is used to indicate whether the geometric vertices and the attribute vertices in the manifold mesh have a same connection relationship.

Optionally, the total bitstream of the original mesh further includes:
a fourth bitstream, where the fourth bitstream is obtained by encoding third indication information of the duplicate vertices in the manifold mesh, and the third indication information is used to indicate whether geometric information and attribute information of the duplicate vertices are repeatedly encoded.

Optionally, in a case that the encoding end simultaneously encodes the connection relationship, the geometric information, and the attribute information, the total bitstream of the original mesh further includes:
a fifth bitstream, where the fifth bitstream is obtained by encoding fourth indication information of vertices in the manifold mesh, where the fourth indication information is used to indicate whether the vertices are duplicate vertices.

The encoding apparatus in this embodiment of this application performs splitting processing on a non-manifold structure in an original mesh to obtain a manifold mesh; adds non-manifold identification information to duplicate vertices in the manifold mesh, and determines index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and the encoding apparatus encodes the non-manifold identification information and the index information of the first duplicate vertex to obtain a first bitstream. Through the foregoing solution, the decoding end can restore the non-manifold structure of the original mesh based on the non-manifold identification information obtained by decoding the first bitstream and the index information of the first duplicate vertex, thereby implementing the purpose of lossless encoding of the original mesh. When encoding meshes with non-manifold structure, the encoding end adds non-manifold identifiers only to the duplicate points in the manifold mesh, instead of adding a non-manifold identifier to each vertex in the manifold mesh, thereby implementing lossless encoding of three-dimensional meshes more efficiently.

As shown in FIG. 12, an embodiment of this application further provides a decoding apparatus 1200, including:

a fifth obtaining module 1201, configured to decode a first bitstream to obtain decoding information, where the decoding information includes non-manifold identification information and index information of a first duplicate vertex, the first duplicate vertex is a duplicate vertex generated by performing splitting processing on a non-manifold structure in an original mesh, and the non-manifold identification information is used for indicating whether the duplicate vertex is a duplicate vertex generated by performing splitting processing on the non-manifold structure; and
a second processing module 1202, configured to restore the non-manifold structure in the original mesh based on the decoding information.

Optionally, the decoding information further includes first indication information, and the first indication information is used to indicate whether a non-manifold structure is present in the original mesh; and
the second processing module is configured to: in a case that the first indication information indicates that the non-manifold structure is present in the original mesh, restore the non-manifold structure in the original mesh based on the index information of the first duplicate vertex and the non-manifold identification information.

Optionally, the second processing module includes:

a reconstruction submodule, configured to reconstruct a manifold mesh based on second target information of the manifold mesh, where the second target information is obtained by decoding a second bitstream, and the second target information includes a connection relationship, geometric information, and attribute information; and
a restoration submodule configured to restore the non-manifold structure in the original mesh based on the reconstructed manifold mesh, the index information of the first duplicate vertex, and the non-manifold identification information.

Optionally, the restoration submodule is configured to restore the non-manifold structure in the original mesh based on the reconstructed manifold mesh, the index information of the first duplicate vertex, the non-manifold identification information, and fourth indication information; where
the fourth indication information is obtained by decoding a fifth bitstream, and the fourth indication information is used to indicate whether vertices in the manifold mesh are duplicate vertices.

Optionally, the apparatus in this embodiment of this application further includes:
a sixth obtaining module, configured to decode the second bitstream to obtain the second target information of the manifold mesh.

Optionally, the sixth obtaining module is configured to decode the second bitstream based on third indication information of the duplicate vertices in the manifold mesh to obtain geometric information and attribute information of the manifold mesh; where
the third indication information is obtained by decoding a fourth bitstream, and the third indication information is used to indicate whether geometric information and attribute information of the duplicate vertices are repeatedly encoded.

Optionally, the first duplicate vertex includes a geometric duplicate vertex and an attribute duplicate vertex;

in a case that geometric vertices and attribute vertices in the manifold mesh have a same connection relationship, the geometric duplicate vertices and the attribute duplicate vertices share one group of non-manifold structure information, and the non-manifold structure information includes non-manifold identification information and index information; or

in a case that the geometric vertices and the attribute vertices in the manifold mesh have different connection relationships, the geometric duplicate vertices correspond to a first group of non-manifold structure information, the attribute duplicate vertices correspond to a second group of non-manifold structure information, and both the first group of non-manifold structure information and the second group of non-manifold structure information include non-manifold identification information and index information.

Optionally, the apparatus in this embodiment of this application further includes:

a seventh obtaining module, configured to decode a third bitstream to obtain second indication information, where the second indication information is used to indicate whether the geometric vertices and the attribute vertices in the manifold mesh have a same connection relationship; and

a determining module, configured to determine, based on the second indication information, whether the geometric vertices and the attribute vertices in the manifold mesh have a same connection relationship.

The decoding apparatus in this embodiment of this application decodes the first bitstream to obtain the first indication information, the non-manifold identification information, and the index information of the first duplicate vertex. In a case that the first indication information indicates that the non-manifold structure is present in the original mesh, the non-manifold structure in the original mesh is restored based on the index information of the first duplicate vertex and the non-manifold identification information. In this solution, the non-manifold structure of the original mesh can be restored based on the non-manifold identification information obtained by decoding the first bitstream and the index information of the first duplicate vertex, thereby implementing the purpose of lossless encoding of the original mesh. Non-manifold identifiers are added only to the duplicate points in the manifold mesh, instead of adding a non-manifold identifier to each vertex in the manifold mesh, thereby implementing lossless encoding and decoding of three-dimensional meshes more efficiently.

The encoding apparatus and the decoding apparatus in the embodiments of this application may be an electronic device, such as an electronic device with an operating system, or a component in the electronic device, such as an integrated circuit or a chip. The electronic device may be a terminal or a device other than terminals. For example, other devices may be a server, a network attached storage (Network Attached Storage, NAS), and the like. This is not specifically limited in the embodiments of this application.

The encoding apparatus provided in this embodiment of this application can implement the processes implemented in the method embodiment in FIG. 2, with the same technical effects achieved. To avoid repetition, details are not described herein again.

The decoding apparatus provided in this embodiment of this application can implement the processes implemented in the method embodiment in FIG. 9, with the same technical effects achieved. To avoid repetition, details are not described herein again.

Optionally, as shown in FIG. 13, an embodiment of this application further provides an electronic device 1300, including a processor 1301 and a memory 1302, and the memory 1302 stores a program or instructions capable of running on the processor 1301. When the program or instructions are executed by the processor 1301, the steps of the foregoing embodiments of the encoding method or the decoding method may be implemented, with the same technical effects achieved. To avoid repetition, details are not described herein again.

An embodiment of this application further provides an encoding apparatus, including a processor and a communication interface, where the processor is configured to perform splitting processing on a non-manifold structure in an original mesh to obtain a manifold mesh; add non-manifold identification information to duplicate vertices in the manifold mesh, and determine index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and encode the non-manifold identification information and the index information of the first duplicate vertex to obtain a first bitstream. The apparatus embodiment corresponds to the foregoing encoding method embodiment, and the implementation processes and implementations of the foregoing method embodiments can be applied to the apparatus embodiments, with the same technical effects achieved.

An embodiment of this application further provides a decoding apparatus, including a processor and a communication interface, where the processor is configured to decode a first bitstream to obtain decoding information, where the decoding information includes non-manifold identification information and index information of a first duplicate vertex, the first duplicate vertex is a duplicate vertex generated by performing splitting processing on a non-manifold structure in an original mesh, and the non-manifold identification information is used for indicating whether the duplicate vertex is a duplicate vertex generated by performing splitting processing on the non-manifold structure; and restore the non-manifold structure in the original mesh based on the decoding information. The apparatus embodiment corresponds to the foregoing decoding method embodiment, and the implementation processes and implementations of the foregoing method embodiments can be applied to the apparatus embodiments, with the same technical effects achieved.

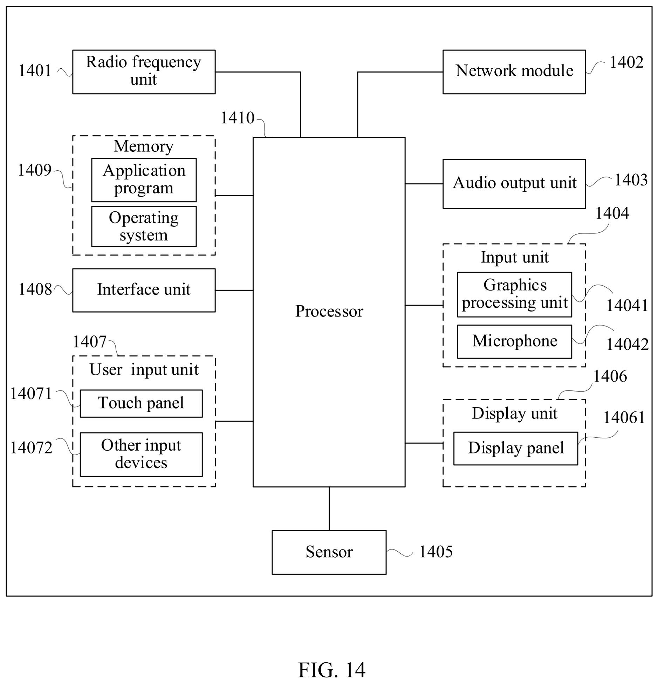

Specifically, FIG. 14 is a schematic diagram of a hardware structure of an encoding apparatus or a decoding apparatus for implementing the embodiments of this application.

The encoding apparatus or decoding apparatus includes but is not limited to at least part of components such as a radio frequency unit 1401, a network module 1402, an audio output unit 1403, an input unit 1404, a sensor 1405, a display unit 1406, a user input unit 1407, an interface unit 1408, a memory 1409, and a processor 1410.

A person skilled in the art may understand that the encoding apparatus or decoding apparatus may further include a power supply (such as a battery) for supplying power to the components. The power supply may be logically connected to the processor 1410 through a power management system. In this way, functions such as charge management, discharge management, and power consumption management are implemented by using the power management system. The structure of the apparatus shown in FIG. 14 does not constitute a limitation on the apparatus. The apparatus may include more or fewer components than those shown in the figure, or some components are combined, or component arrangements are different. Details are not described herein again.

It can be understood that in this embodiment of this application, the input unit 1404 may include a graphics processing unit (Graphics Processing Unit, GPU) 14041 and a microphone 14042. The graphics processing unit 14041 processes image data of a still picture or video obtained by an image capture apparatus (such as a camera) in a video capture mode or an image capture mode. The display unit 1406 may include a display panel 14061. The display panel 14061 may be configured in a form of a liquid crystal display, an organic light-emitting diode display, or the like. The user input unit 1407 includes at least one of a touch panel 14071 and other input devices 14072. The touch panel 14071 is also referred to as a touchscreen. The touch panel 14071 may include two parts: a touch detection apparatus and a touch controller. The other input devices 14072 may include but be not limited to a physical keyboard, a function key (such as a volume control key or an on/off key), a trackball, a mouse, and a joystick. Details are not described herein.

In this embodiment of this application, after receiving downlink data from a network-side device, the radio frequency unit 1401 sends the downlink data to the processor 1410 for processing; and the radio frequency unit 1401 also sends uplink data to the network-side device. Generally, the radio frequency unit 1401 includes but is not limited to an antenna, an amplifier, a transceiver, a coupler, a low noise amplifier, a duplexer, and the like.

The memory 1409 may be configured to store software programs or instructions and various data. The memory 1409 may mainly include a first storage area for storing programs or instructions and a second storage area for storing data, where the first storage area may store an operating system, an application program or instructions required by at least one function (for example, an audio playing function and an image playing function), and the like. The memory 1409 may include a volatile memory or a non-volatile memory, or the memory 1409 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static RAM (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1409 described in the embodiments of this application is intended to include but is not limited to these and any other suitable types of memories.

The processor 1410 may include one or more processing units. Optionally, the processor 1410 integrates an application processor and a modem processor. The application processor mainly processes operations related to an operating system, a user interface, an application program, and the like. The modem processor mainly processes wireless communication signals, for example, a baseband processor. It can be understood that the modem processor may alternatively be not integrated in the processor 1410.

Optionally, in a case that the apparatus is an encoding apparatus:

the processor 1410 is configured to perform splitting processing on a non-manifold structure in an original mesh to obtain a manifold mesh;

add non-manifold identification information to duplicate vertices in the manifold mesh, and determine index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and

encode the non-manifold identification information and the index information of the first duplicate vertex to obtain a first bitstream.

Optionally, the first bitstream further includes encoding information of first indication information, and the first indication information is used to indicate whether a non-manifold structure is present in the original mesh.

Optionally, the processor 1410 is further configured to:

encode the manifold mesh to obtain a second bitstream; and
obtain a total bitstream of the original mesh based on the first bitstream and the second bitstream.

Optionally, the processor 1410 is further configured to:

encode second target information of the manifold mesh to obtain the second bitstream; where
the second target information includes a connection relationship, geometric information, and attribute information.

Optionally, the first duplicate vertex includes a geometric duplicate vertex and an attribute duplicate vertex;

in a case that geometric vertices and attribute vertices in the manifold mesh have a same connection relationship, the geometric duplicate vertices and the attribute duplicate vertices share one group of non-manifold structure information, and the non-manifold structure information includes non-manifold identification information and index information; or
in a case that the geometric vertices and the attribute vertices in the manifold mesh have different connection relationships, the geometric duplicate vertices correspond to a first group of non-manifold structure information, the attribute duplicate vertices correspond to a second group of non-manifold structure information, and both the first group of non-manifold structure information and the second group of non-manifold structure information include non-manifold identification information and index information.

Optionally, the total bitstream of the original mesh further includes:
a third bitstream, where the third bitstream is obtained by encoding second indication information, and the second indication information is used to indicate whether the geometric vertices and the attribute vertices in the manifold mesh have a same connection relationship.

Optionally, the total bitstream of the original mesh further includes:
a fourth bitstream, where the fourth bitstream is obtained by encoding third indication information of the duplicate vertices in the manifold mesh, and the third indication information is used to indicate whether geometric information and attribute information of the duplicate vertices are repeatedly encoded.

Optionally, in a case that the encoding end simultaneously encodes the connection relationship, the geometric information, and the attribute information, the total bitstream of the original mesh further includes:
a fifth bitstream, where the fifth bitstream is obtained by encoding fourth indication information of vertices in the manifold mesh, where the fourth indication information is used to indicate whether the vertices are duplicate vertices.

Optionally, in a case that the apparatus is a decoding apparatus:

the processor 1410 is configured to decode a first bitstream to obtain decoding information, where the decoding information includes non-manifold identification information and index information of a first duplicate vertex, the first duplicate vertex is a duplicate vertex generated by performing splitting processing on a non-manifold structure in an original mesh, and the non-manifold identification information is used for indicating whether the duplicate vertex is a duplicate vertex generated by performing splitting processing on the non-manifold structure; and the first indication information is used to indicate whether a non-manifold structure is present in the original mesh; and
restore the non-manifold structure in the original mesh based on the decoding information.

Optionally, the decoding information further includes first indication information, and the first indication information is used to indicate whether a non-manifold structure is present in the original mesh; and

The processor 1410 is further configured to:
in a case that the first indication information indicates that a non-manifold structure is present in the original mesh, restore the non-manifold structure in the original mesh based on the index information of the first duplicate vertex and the non-manifold identification information. Optionally, the processor 1410 is further configured to:

reconstruct a manifold mesh based on second target information of the manifold mesh, where the second target information is obtained by decoding a second bitstream, and the second target information includes a connection relationship, geometric information, and attribute information; and
restore the non-manifold structure in the original mesh based on the reconstructed manifold mesh, the index information of the first duplicate vertex, and the non-manifold identification information.

22

Optionally, the processor 1410 is further configured to:

restore the non-manifold structure in the original mesh based on the reconstructed manifold mesh, the index information of the first duplicate vertex, the non-manifold identification information, and fourth indication information; where
the fourth indication information is obtained by decoding a fifth bitstream, and the fourth indication information is used to indicate whether vertices in the manifold mesh are duplicate vertices.

Optionally, the processor 1410 is further configured to:
decode the second bitstream to obtain the second target information of the manifold mesh.

Optionally, the processor 1410 is further configured to:

decode the second bitstream based on third indication information of the duplicate vertices in the manifold mesh to obtain geometric information and attribute information of the manifold mesh; where
the third indication information is obtained by decoding a fourth bitstream, and the third indication information is used to indicate whether geometric information and attribute information of the duplicate vertices are repeatedly encoded.

Optionally, the first duplicate vertex includes a geometric duplicate vertex and an attribute duplicate vertex;

in a case that geometric vertices and attribute vertices in the manifold mesh have a same connection relationship, the geometric duplicate vertices and the attribute duplicate vertices share one group of non-manifold structure information, and the non-manifold structure information includes non-manifold identification information and index information; or
in a case that the geometric vertices and the attribute vertices in the manifold mesh have different connection relationships, the geometric duplicate vertices correspond to a first group of non-manifold structure information, the attribute duplicate vertices correspond to a second group of non-manifold structure information, and both the first group of non-manifold structure information and the second group of non-manifold structure information include non-manifold identification information and index information.

Optionally, the processor 1410 is further configured to:

decode a third bitstream to obtain second indication information, where the second indication information is used to indicate whether the geometric vertices and the attribute vertices in the manifold mesh have a same connection relationship; and
determine, based on the second indication information, whether the geometric vertices and the attribute vertices in the manifold mesh have a same connection relationship.

In this embodiment of this application, splitting processing is performed on a non-manifold structure in an original mesh to obtain a manifold mesh; non-manifold identification information is added to duplicate vertices in the manifold mesh, and index information of a first duplicate vertex in the duplicate vertices is determined, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and the encoding end encodes the non-manifold identification information and the index information of the first duplicate vertex to obtain a first bitstream. Through the foregoing solution, the decoding end can restore the non-manifold structure of the original mesh based on the non-manifold identification information obtained by decoding the first bitstream and the index information of the first duplicate vertex, thereby implementing the purpose of lossless encoding of the original mesh. When encoding meshes with non-manifold structure, the encoding end adds non-manifold identifiers only to the duplicate points in the manifold mesh, instead of adding a non-manifold identifier to each vertex in the manifold mesh, thereby implementing lossless encoding of three-dimensional meshes more efficiently.

An embodiment of this application further provides a readable storage medium, where the readable storage medium stores a program or instructions, and when the program or the instructions are executed by a processor, the processes of the foregoing embodiments of the encoding method or decoding method are implemented, with the same technical effects achieved. To avoid repetition, details are not described herein again.

The processor is a processor in the apparatus described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes of the foregoing embodiments of the encoding method or decoding method, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the encoding method or decoding method, with the same technical effects achieved. To avoid repetition, details are not repeated herein.

An embodiment of this application further provides an encoding and decoding system, which includes an encoding apparatus or a decoding apparatus, where the encoding apparatus can be configured to execute the steps of the encoding method as described above, and the decoding apparatus can be configured to execute the steps of the decoding method as described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples can be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An encoding method, comprising:

   performing, by an encoding end, splitting processing on a non-manifold structure in an original mesh to obtain a manifold mesh;
   adding, by the encoding end, non-manifold identification information to duplicate vertices in the manifold mesh, and determining index information of a first duplicate vertex in the duplicate vertices, wherein the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and
   encoding, by the encoding end, the non-manifold identification information and the index information of the first duplicate vertex to obtain a first bitstream.

2. The method according to claim 1, wherein the first bitstream further comprises encoding information of first indication information, and the first indication information is used to indicate whether a non-manifold structure is present in the original mesh.

**3.** The method according to claim 1 or 2, wherein the method further comprises:

encoding, by the encoding end, the manifold mesh to obtain a second bitstream; and
obtaining, by the encoding end, a total bitstream of the original mesh based on the first bitstream and the second bitstream.

**4.** The method according to claim 3, wherein the encoding, by the encoding end, the manifold mesh to obtain a second bitstream comprises:

encoding, by the encoding end, second target information of the manifold mesh to obtain the second bitstream; wherein
the second target information comprises a connection relationship, geometric information, and attribute information.

**5.** The method according to any one of claims 1 to 4, wherein the first duplicate vertex comprises a geometric duplicate vertex and an attribute duplicate vertex;

in a case that geometric vertices and attribute vertices in the manifold mesh have a same connection relationship, the geometric duplicate vertices and the attribute duplicate vertices share one group of non-manifold structure information, and the non-manifold structure information comprises non-manifold identification information and index information; or
in a case that the geometric vertices and the attribute vertices in the manifold mesh have different connection relationships, the geometric duplicate vertices correspond to a first group of non-manifold structure information, the attribute duplicate vertices correspond to a second group of non-manifold structure information, and both the first group of non-manifold structure information and the second group of non-manifold structure information comprise non-manifold identification information and index information.

**6.** The method according to claim 5, wherein the total bitstream of the original mesh further comprises:
a third bitstream, wherein the third bitstream is obtained by encoding second indication information, and the second indication information is used to indicate whether the geometric vertices and the attribute vertices in the manifold mesh have a same connection relationship.

**7.** The method according to any one of claims 1 to 6, wherein the total bitstream of the original mesh further comprises:
a fourth bitstream, wherein the fourth bitstream is obtained by encoding third indication information of the duplicate vertices in the manifold mesh, and the third indication information is used to indicate whether geometric information and attribute information of the duplicate vertices are repeatedly encoded.

**8.** The method according to claim 4, wherein in a case that the encoding end simultaneously encodes the connection relationship, the geometric information, and the attribute information, the total bitstream of the original mesh further comprises:
a fifth bitstream, wherein the fifth bitstream is obtained by encoding fourth indication information of vertices in the manifold mesh, wherein the fourth indication information is used to indicate whether the vertices are duplicate vertices.

**9.** A decoding method, comprising:

decoding, by a decoding end, a first bitstream to obtain decoding information, wherein the decoding information comprises non-manifold identification information and index information of a first duplicate vertex, the first duplicate vertex is a duplicate vertex generated by performing splitting processing on a non-manifold structure in an original mesh, and the non-manifold identification information is used for indicating whether the duplicate vertex is a duplicate vertex generated by performing splitting processing on the non-manifold structure; and
restoring, by the decoding end, the non-manifold structure in the original mesh based on the decoding information.

**10.** The method according to claim 9, wherein the decoding information further comprises first indication information, and the first indication information is used to indicate whether a non-manifold structure is present in the original mesh; and
the restoring, by the decoding end, the non-manifold structure in the original mesh based on the decoding information comprises:

in a case that the first indication information indicates that a non-manifold structure is present in the original mesh, restoring the non-manifold structure in the original mesh based on the index information of the first duplicate vertex and the non-manifold identification information.

11. The method according to claim 9 or 10, wherein the restoring the non-manifold structure in the original mesh based on the index information of the first duplicate vertex and the non-manifold identification information comprises:

reconstructing a manifold mesh based on second target information of the manifold mesh, wherein the second target information is obtained by decoding a second bitstream, and the second target information comprises a connection relationship, geometric information, and attribute information; and

restoring the non-manifold structure in the original mesh based on the reconstructed manifold mesh, the index information of the first duplicate vertex, and the non-manifold identification information.

12. The method according to claim 11, wherein the restoring the non-manifold structure in the original mesh based on the reconstructed manifold mesh, the index information of the first duplicate vertex, and the non-manifold identification information comprises:

restoring the non-manifold structure in the original mesh based on the reconstructed manifold mesh, the index information of the first duplicate vertex, the non-manifold identification information, and fourth indication information; wherein

the fourth indication information is obtained by decoding a fifth bitstream, and the fourth indication information is used to indicate whether vertices in the manifold mesh are duplicate vertices.

13. The method according to claim 11 or 12, further comprising:
decoding, by the decoding end, the second bitstream to obtain the second target information of the manifold mesh.

14. The method according to claim 13, wherein the decoding, by the decoding end, the second bitstream to obtain the second target information of the manifold mesh comprises:

decoding the second bitstream based on third indication information of the duplicate vertices in the manifold mesh to obtain geometric information and attribute information of the manifold mesh; wherein

the third indication information is obtained by decoding a fourth bitstream, and the third indication information is used to indicate whether geometric information and attribute information of the duplicate vertices are repeatedly encoded.

15. The method according to any one of claims 9 to 14, wherein the first duplicate vertex comprises a geometric duplicate vertex and an attribute duplicate vertex;

in a case that geometric vertices and attribute vertices in the manifold mesh have a same connection relationship, the geometric duplicate vertices and the attribute duplicate vertices share one group of non-manifold structure information, and the non-manifold structure information comprises non-manifold identification information and index information; or

in a case that the geometric vertices and the attribute vertices in the manifold mesh have different connection relationships, the geometric duplicate vertices correspond to a first group of non-manifold structure information, the attribute duplicate vertices correspond to a second group of non-manifold structure information, and both the first group of non-manifold structure information and the second group of non-manifold structure information comprise non-manifold identification information and index information.

16. The method according to claim 15, further comprising:

decoding a third bitstream to obtain second indication information, wherein the second indication information is used to indicate whether the geometric vertices and the attribute vertices in the manifold mesh have a same connection relationship; and

determining, based on the second indication information, whether the geometric vertices and the attribute vertices in the manifold mesh have a same connection relationship.

17. An encoding apparatus, comprising:

a first obtaining module, configured to perform splitting processing on a non-manifold structure in an original mesh to obtain a manifold mesh;

a first processing module, configured to add non-manifold identification information to duplicate vertices in the manifold mesh, and determine index information of a first duplicate vertex in the duplicate vertices, wherein the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure; and

a second obtaining module, configured to encode the non-manifold identification information and the index information of the first duplicate vertex to obtain a first bitstream.

18. A decoding apparatus, comprising:

a fifth obtaining module, configured to decode a first bitstream to obtain decoding information, wherein the decoding information comprises non-manifold identification information and index information of a first duplicate vertex, the first duplicate vertex is a duplicate vertex generated by performing splitting processing on a non-manifold structure in an original mesh, and the non-manifold identification information is used for indicating whether the duplicate vertex is a duplicate vertex generated by performing splitting processing on the non-manifold structure; and

a second processing module, configured to restore the non-manifold structure in the original mesh based on the decoding information.

19. An electronic device, comprising a processor and a memory, wherein a program or instructions capable of running on the processor are stored in the memory, and when the program or instructions are executed by the processor, the steps of the encoding method according to any one of claims 1 to 8 are implemented; or the steps of the decoding method according to any one of claims 9 to 16 are implemented.

20. A readable storage medium, wherein the readable storage medium stores a program or instructions, and when the program or instructions are executed by a processor, the steps of the encoding method according to any one of claims 1 to 8 or the steps of the decoding method according to according to any one of claims 9 to 16 are implemented.

FIG. 1

An encoding end performs splitting processing on a non-manifold structure in an original mesh to obtain a manifold mesh                                   201

The encoding end adds non-manifold identification information to duplicate vertices in the manifold mesh, and determines index information of a first duplicate vertex in the duplicate vertices, where the non-manifold identification information is used to indicate whether the duplicate vertex is a duplicate vertex generated by performing splitting processing on the non-manifold structure, and the first duplicate vertex is a duplicate vertex generated by performing splitting processing on the non-manifold structure                                   202

The encoding end encodes the non-manifold identification information and the index information of the first duplicate vertex to obtain a first bitstream                                   203

FIG. 2

FIG. 3

FIG. 4

FIG. 5

FIG. 6

FIG. 7

FIG. 8

A decoding end decodes a first bitstream to obtain decoding information, where the decoding information includes non-manifold identification information and index information of a first duplicate vertex, the first duplicate vertex is a duplicate vertex generated by performing splitting processing on a non-manifold structure in an original mesh, and the non-manifold identification information is used for indicating whether the duplicate vertex is a duplicate vertex generated by performing splitting processing on the non-manifold structure

901

The decoding end restores the non-manifold structure in the original mesh based on the decoding information

902

FIG. 9

FIG. 10

Encoding apparatus — 1100

First obtaining module — 1101

First processing module — 1102

Second obtaining module — 1103

FIG. 11

Decoding apparatus — 1200

Fifth obtaining module — 1201

Second processing module — 1202

FIG. 12

1300

Electronic device

1301 — Processor ⟺ Memory — 1302

FIG. 13

1401 — Radio frequency unit

Network module — 1402

1410

Memory

1409 —
Application program

Operating system

Audio output unit — 1403

1404

Input unit

Graphics processing unit — 14041

Microphone — 14042

1408 — Interface unit

Processor

1407

User input unit

14071 — Touch panel

14072 — Other input devices

1406

Display unit — 14061

Display panel

Sensor — 1405

FIG. 14

## INTERNATIONAL SEARCH REPORT

| International application No. |
|---|
| **PCT/CN2024/100834** |

**A. CLASSIFICATION OF SUBJECT MATTER**

G06T9/00(2006.01)i

According to International Patent Classification (IPC) or to both national classification and IPC

**B. FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI; IEEE: 三维, 网格, 非流形, 拆分, 编码, 无损, 压缩, 解码, 重复, 复制, 点, 标识, 3D, mesh, non-manifold, split, encode, lossless, compress, decode, repeat, duplicate, vertex, identity

**C. DOCUMENTS CONSIDERED TO BE RELEVANT**

| Category* | Citation of document, with indication, where appropriate, of the relevant passages | Relevant to claim No. |
|---|---|---|
| PX | CN 117915105 A (VIVO MOBILE COMMUNICATION CO., LTD.) 19 April 2024 (2024-04-19)<br>description, paragraphs 67-348, and figures 2-10 | 1-20 |
| X | US 2009278844 A1 (CHANG, Eunyoung et al.) 12 November 2009 (2009-11-12)<br>description, paragraphs 26-71, and figures 2-8 | 1-20 |
| X | KR 20080066216 A (ELECTRONICS AND TELECOMMUNICATIONS RESEARCH INSTITUTE et al.) 16 July 2008 (2008-07-16)<br>description, paragraphs 16-124, and figures 2a-2b, 3a-3b, and 4-8 | 1-20 |
| A | US 6452596 B1 (INTERNATIONAL BUSINESS MACHINES CORP.) 17 September 2002 (2002-09-17)<br>entire document | 1-20 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 September 2024** | **21 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/100834**

| Patent document cited in search report | | | Publication date (day/month/year) | Patent family member(s) | | | Publication date (day/month/year) |
|---|---|---|---|---|---|---|---|
| CN | 117915105 | A | 19 April 2024 | None | | | |
| US | 2009278844 | A1 | 12 November 2009 | WO | 2008084891 | A1 | 17 July 2008 |
| | | | | CA | 2674919 | A1 | 17 July 2008 |
| | | | | JP | 2010516154 | A | 13 May 2010 |
| | | | | JP | 5232799 | B2 | 10 July 2013 |
| KR | 20080066216 | A | 16 July 2008 | KR | 101268508 | B1 | 05 June 2013 |
| US | 6452596 | B1 | 17 September 2002 | None | | | |

Form PCT/ISA/210 (patent family annex) (July 2022)

36

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310802552